(19) Europäisches Patentamt
European Patent Office
Office européen des brevets

(11) **EP 3 491 768 B1**

(12) **EUROPEAN PATENT SPECIFICATION**

(45) Date of publication and mention
of the grant of the patent:
**15.05.2024 Bulletin 2024/20**

(21) Application number: **17746622.4**

(22) Date of filing: **25.07.2017**

(51) International Patent Classification (IPC):
**H04L 5/00** (2006.01)

(52) Cooperative Patent Classification (CPC):
**H04L 5/0053**

(86) International application number:
**PCT/US2017/043629**

(87) International publication number:
**WO 2018/022560 (01.02.2018 Gazette 2018/05)**

(54) **DATA COMMUNICATION OVER SHORTENED TTI (TRANSMISSION TIME INTERVAL)**

DATENÜBERTRAGUNG ÜBER GEKÜRZTES TTI (ÜBERTRAGUNGSZEITINTERVALL)

COMMUNICATION DE DONNÉES SUR TTI (INTERVALLES DE TEMPS DE TRANSMISSION) RACCOURCIS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.07.2016 US 201662366862 P**

(43) Date of publication of application:
**05.06.2019 Bulletin 2019/23**

(73) Proprietor: **Apple Inc.**
**Cupertino, CA 95014 (US)**

(72) Inventors:
• **HONG, He**
**Sunnyvale, California 94087 (US)**
• **XIONG, Gang**
**Portland, OR 97229 (US)**
• **KWON, Hwan-Joon**
**Portland, Oregon 97229 (US)**
• **HAN, Seunghee**
**San Jose, California 95120 (US)**
• **DAVYDOV, Alexei**
**603132 Nizhny Novgorod (RU)**

(74) Representative: **Lang, Johannes et al**
**Bardehle Pagenberg Partnerschaft mbB
Patentanwälte, Rechtsanwälte
Prinzregentenplatz 7
81675 München (DE)**

(56) References cited:
• **LG ELECTRONICS: "Discussions on DCI and sPDCCH for latency reduction", 3GPP DRAFT; R1-164542 DISCUSSIONS ON DCI AND SPDCCH FOR LATENCY REDUCTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. RAN WG1, no. Nanjing, China; 20160523 - 20160527 14 May 2016 (2016-05-14), XP051096394, Retrieved from the Internet: URL:http://www.3gpp.org/ftp/tsg_ran/WG1_RL 1/TSGR1_85/Docs/ [retrieved on 2016-05-14]**
• **LENOVO: "Design of UL channels for shortened TTI", 3GPP DRAFT; R1-164650, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 13 May 2016 (2016-05-13), XP051096870, Retrieved from the Internet: URL:http://www.3gpp.org/ftp/tsg_ran/WG1_RL 1/TSGR1_85/Docs/ [retrieved on 2016-05-13]**

- **ERICSSON: "On the operation with different TTI lengths", 3GPP DRAFT; R1-165299, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, P.R. China; 20160523 - 20160527 13 May 2016 (2016-05-13), XP051096737, Retrieved from the Internet: URL:http://www.3gpp.org/ftp/tsg_ran/WG1_RL 1/TSGR1_85/Docs/ [retrieved on 2016-05-13]**
- **ERICSSON: "Physical design aspects of sPDSCH", 3GPP DRAFT; R1-165295, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, P.R. China; 20160523 - 20160527 13 May 2016 (2016-05-13), XP051096741, Retrieved from the Internet: URL:http://www.3gpp.org/ftp/tsg_ran/WG1_RL 1/TSGR1_85/Docs/ [retrieved on 2016-05-13]**

**Description**

REFERENCE TO RELATED APPLICATIONS

This application claims the benefit of U.S. Provisional Application No. 62/366,862 filed July 26, 2016, entitled "EMPLOYING DATA COMMUNICATION OVER SHORTENING TTI".

FIELD

The present disclosure relates to wireless technology, and more specifically to techniques that can facilitate communication via sTTIs (shortened Transmission Time Intervals) according to the features of the independent claims.

BACKGROUND

Packet data latency is one of the key performance metrics for wireless communication systems such as LTE (Long Term Evolution) to improve user experience. Packet data latency is important not only for the perceived responsiveness of the system, but is also a parameter that influences throughput. HTTP (HyperText Transfer Protocol)/TCP (Transmission Control Protocol) is the dominant application and transport layer protocol suite used on the Internet today. The typical size of HTTP-based transactions over the Internet is in the range of a few tens of kB (kilobyte) up to 1 MB (megabyte). In this size range, the TCP slow start period is a significant part of the total transport period of the packet stream. One work item (WI), "New Work Item on shorten TTI and processing time for LTE" has been approved in the 3GPP (Third Generation Partnership Project) RAN (Radio Access Network) #72 meeting to study and improve the packet data latencies of LTE system within the Rel-14 (LTE Release 14) timeframe. "Discussions on DCI and sPDCCH for latency reduction", vol. RAN WG1, 3GPP Draft; R1-164542 to LG Electronics discloses data scheduling via Slow DCI and Fast DCI wherein sPDSCHs/sPUSCHs for multiple sTTIs are scheduled, and if Slow DCI and a Fast DCI overlap within a sTTI, fast DCI is prioritised over slow DCI thereby resulting in DCI overhead reduction when multiple sPDSCHs/sPUSCHs need to be scheduled.
ERICSSON: "On the Operation with different TTI lengths", 3GPP DRAFT; R1-165299 discusses how different TTI can be supported in LTE and what the implications on HARQ and grant timing are.
ERICSSON: "Physical design aspects of sPDSCH", 3GPP DRAFT; R1-165295, provides views on the physical layer design for TTI shortening for downlink transmissions and describes how to extend the design for PDSCH with a shortened TTI length, i.e. sPDSCH.

SUMMARY

The present invention is defined by the features of the independent claim(s). Preferred advantageous embodiments thereof are defined by the sub-features of the dependent claims.
Any reference to "embodiment(s)", "example(s)" or "aspect(s) of the invention" in this description not falling under the scope of the claims should be interpreted as illustrative example(s) for understanding the invention.

BRIEF DESCRIPTION OF THE DRAWINGS

FIG. 1 is a block diagram illustrating an example user equipment (UE) useable in connection with various aspects described herein.
FIG. 2 is a diagram illustrating example components of a device that can be employed in accordance with various aspects discussed herein.
**FIG. 3** is a diagram illustrating example interfaces of baseband circuitry that can be employed in accordance with various aspects discussed herein.
**FIG. 4** is a block diagram illustrating a system employable at a UE (User Equipment) that facilitates communication based on a sTTI (shortened TTI (Transmission Time Interval)), according to various aspects described herein.
**FIG. 5** is a block diagram illustrating a system employable at a BS (Base Station) that facilitates communication based on a sTTI, according to various aspects described herein.
**FIG. 6** is a diagram illustrating four examples of sTTI indexing, according to various aspects discussed herein.
**FIG. 7** is a pair of diagrams illustrating example sTTI designs for 4-symbol sTTIs, according to various aspects discussed herein.
**FIG. 8** is is a diagram illustrating an example design involving HARQ (Hybrid Automatic Repeat Request)-ACK (Acknowledgement) payloads of one DL (Downlink) subframe distributed over all available UL (Uplink) sTTIs in a paired UL subframe, according to various aspects discussed herein.

**FIG. 9** is a diagram illustrating an example of multi-sTTI scheduling that can be employed according to various aspects discussed herein.

**FIG. 10** is a flow diagram of an example method employable at a BS that facilitates communication based on sTTIs, according to various aspects discussed herein.

**FIG. 11** is a flow diagram of an example method employable at a UE that facilitates communication based on sTTIs, according to various aspects discussed herein.

## DETAILED DESCRIPTION

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor (e.g., a microprocessor, a controller, or other processing device), a process running on a processor, a controller, an object, an executable, a program, a storage device, a computer, a tablet PC and/or a user equipment (e.g., mobile phone, etc.) with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising." Additionally, in situations wherein one or more numbered items are discussed (e.g., a "first X", a "second X", etc.), in general the one or more numbered items may be distinct or they may be the same, although in some situations the context may indicate that they are distinct or that they are the same.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

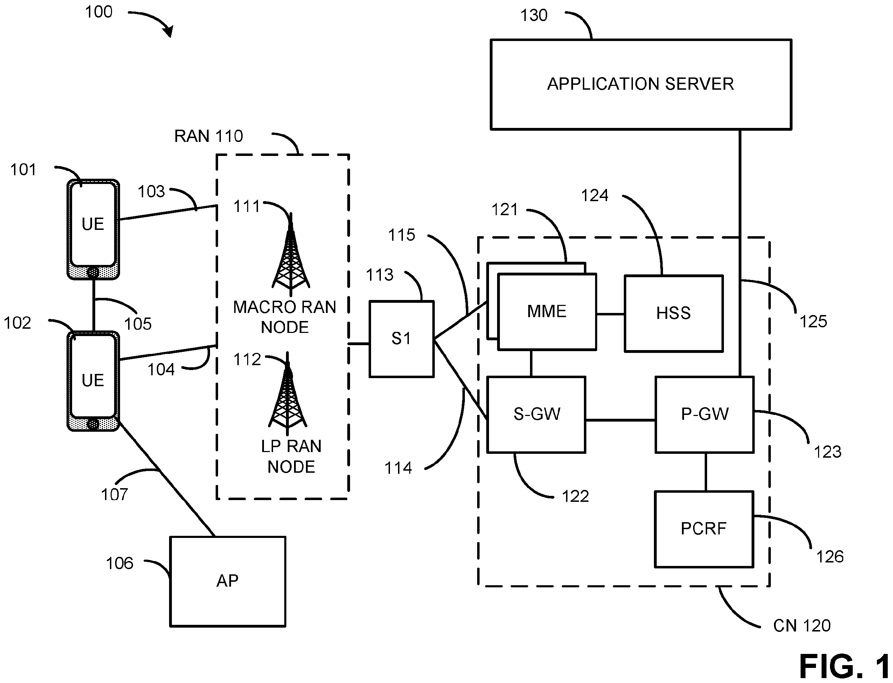

Embodiments described herein may be implemented into a system using any suitably configured hardware and/or software. **FIG. 1** illustrates an architecture of a system 100 of a network in accordance with some embodiments. The system 100 is shown to include a user equipment (UE) 101 and a UE 102. The UEs 101 and 102 are illustrated as smartphones (e.g., handheld touchscreen mobile computing devices connectable to one or more cellular networks), but may also comprise any mobile or non-mobile computing device, such as Personal Data Assistants (PDAs), pagers, laptop computers, desktop computers, wireless handsets, or any computing device including a wireless communications interface.

In some embodiments, any of the UEs 101 and 102 can comprise an Internet of Things (IoT) UE, which can comprise a network access layer designed for low-power IoT applications utilizing short-lived UE connections. An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

The UEs 101 and 102 may be configured to connect, e.g., communicatively couple, with a radio access network (RAN) 110 - the RAN 110 may be, for example, an Evolved Universal Mobile Telecommunications System (UMTS) Terrestrial Radio Access Network (E-UTRAN), a NextGen RAN (NG RAN), or some other type of RAN. The UEs 101 and 102 utilize connections 103 and 104, respectively, each of which comprises a physical communications interface or layer (discussed in further detail below); in this example, the connections 103 and 104 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In this embodiment, the UEs 101 and 102 may further directly exchange communication data via a ProSe interface 105. The ProSe interface 105 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 102 is shown to be configured to access an access point (AP) 106 via connection 107. The connection 107 can comprise a local wireless connection, such as a connection consistent with any IEEE 802.11 protocol, wherein the AP 106 would comprise a wireless fidelity (WiFi®) router. In this example, the AP 106 is shown to be connected to the Internet without connecting to the core network of the wireless system (described in further detail below).

The RAN 110 can include one or more access nodes that enable the connections 103 and 104. These access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). The RAN 110 may include one or more RAN nodes for providing macrocells, e.g., macro RAN node 111, and one or more RAN nodes for providing femtocells or picocells (e.g., cells having smaller coverage areas, smaller user capacity, or higher bandwidth compared to macrocells), e.g., low power (LP) RAN node 112.

Any of the RAN nodes 111 and 112 can terminate the air interface protocol and can be the first point of contact for the UEs 101 and 102. In some embodiments, any of the RAN nodes 111 and 112 can fulfill various logical functions for the RAN 110 including, but not limited to, radio network controller (RNC) functions such as radio bearer management, uplink and downlink dynamic radio resource management and data packet scheduling, and mobility management.

In accordance with some embodiments, the UEs 101 and 102 can be configured to communicate using Orthogonal Frequency-Division Multiplexing (OFDM) communication signals with each other or with any of the RAN nodes 111 and 112 over a multicarrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 111 and 112 to the UEs 101 and 102, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signaling to the UEs 101 and 102. The physical downlink control channel (PDCCH) may carry information about the transport format and resource allocations related to the PDSCH channel, among other things. It may also inform the UEs 101 and 102 about the transport format, resource allocation, and H-ARQ (Hybrid Automatic Repeat Request) information related to the uplink shared channel. Typically, downlink scheduling (assigning control and shared channel resource blocks to the UE 102 within a cell) may be performed at any of the RAN nodes 111 and 112 based on channel quality information fed back from any of the UEs 101 and 102. The downlink resource assignment information may be sent on the PDCCH used for (e.g., assigned to) each of the UEs 101 and 102.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some embodiments may use concepts for resource allocation for control channel information that are an extension of the above-described concepts. For example, some embodiments may utilize an enhanced physical downlink control channel (EPDCCH) that uses PDSCH resources for control information transmission. The EPDCCH may be transmitted using one or more enhanced the control channel elements (ECCEs). Similar to above, each ECCE may correspond to nine sets of four physical resource elements known as an enhanced resource element groups (EREGs). An ECCE may have other numbers of EREGs in some situations.

The RAN 110 is shown to be communicatively coupled to a core network (CN) 120 -via an S1 interface 113. In embodiments, the CN 120 may be an evolved packet core (EPC) network, a NextGen Packet Core (NPC) network, or some other type of CN. In this embodiment the S1 interface 113 is split into two parts: the S1-U interface 114, which carries traffic data between the RAN nodes 111 and 112 and the serving gateway (S-GW) 122, and the S1-mobility management entity (MME) interface 115, which is a signaling interface between the RAN nodes 111 and 112 and MMEs 121.

In this embodiment, the CN 120 comprises the MMEs 121, the S-GW 122, the Packet Data Network (PDN) Gateway (P-GW) 123, and a home subscriber server (HSS) 124. The MMEs 121 may be similar in function to the control plane of legacy Serving General Packet Radio Service (GPRS) Support Nodes (SGSN). The MMEs 121 may manage mobility aspects in access such as gateway selection and tracking area list management. The HSS 124 may comprise a database for network users, including subscription-related information to support the network entities' handling of communication sessions. The CN 120 may comprise one or several HSSs 124, depending on the number of mobile subscribers, on the capacity of the equipment, on the organization of the network, etc. For example, the HSS 124 can provide support for routing/roaming, authentication, authorization, naming/addressing resolution, location dependencies, etc.

The S-GW 122 may terminate the S1 interface 113 towards the RAN 110, and routes data packets between the RAN 110 and the CN 120. In addition, the S-GW 122 may be a local mobility anchor point for inter-RAN node handovers and also may provide an anchor for inter-3GPP mobility. Other responsibilities may include lawful intercept, charging, and some policy enforcement.

The P-GW 123 may terminate an SGi interface toward a PDN. The P-GW 123 may route data packets between the EPC network 123 and external networks such as a network including the application server 130 (alternatively referred to as application function (AF)) via an Internet Protocol (IP) interface 125. Generally, the application server 130 may be an element offering applications that use IP bearer resources with the core network (e.g., UMTS Packet Services (PS) domain, LTE PS data services, etc.). In this embodiment, the P-GW 123 is shown to be communicatively coupled to an application server 130 via an IP communications interface 125. The application server 130 can also be configured to support one or more communication services (e.g., Voice-over-Internet Protocol (VoIP) sessions, PTT sessions, group communication sessions, social networking services, etc.) for the UEs 101 and 102 via the CN 120.

The P-GW 123 may further be a node for policy enforcement and charging data collection. Policy and Charging Enforcement Function (PCRF) 126 is the policy and charging control element of the CN 120. In a non-roaming scenario, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 126 may be communicatively coupled to the application server 130 via the P-GW 123. The application server 130 may signal the PCRF 126 to indicate a new service flow and select the appropriate Quality of Service (QoS) and charging parameters. The PCRF 126 may provision this rule into a Policy and Charging Enforcement Function (PCEF) (not shown) with the appropriate traffic flow template (TFT) and QoS class of identifier (QCI), which commences the QoS and charging as specified by the application server 130.

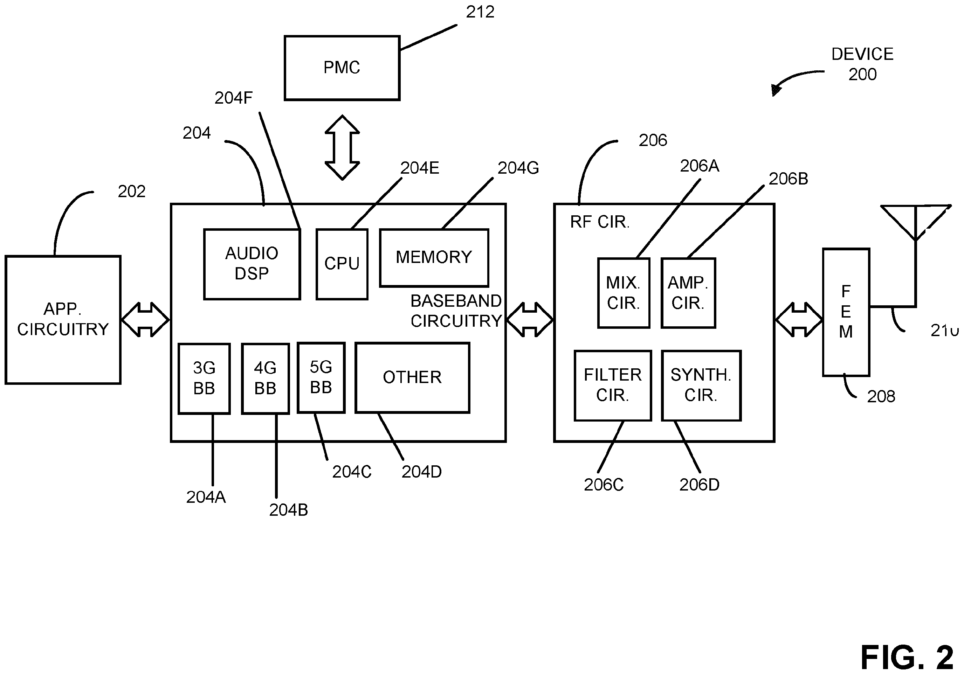

**FIG. 2** illustrates example components of a device 200 in accordance with some embodiments. In some embodiments, the device 200 may include application circuitry 202, baseband circuitry 204, Radio Frequency (RF) circuitry 206, front-end module (FEM) circuitry 208, one or more antennas 210, and power management circuitry (PMC) 212 coupled together at least as shown. The components of the illustrated device 200 may be included in a UE or a RAN node. In some embodiments, the device 200 may include less elements (e.g., a RAN node may not utilize application circuitry 202, and instead include a processor/controller to process IP data received from an EPC). In some embodiments, the device 200 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

The application circuitry 202 may include one or more application processors. For example, the application circuitry 202 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 200. In some embodiments, processors of application circuitry 202 may process IP data packets received from an EPC.

The baseband circuitry 204 may include circuitry such as, but not limited to, one or more single-core or multi-core processors. The baseband circuitry 204 may include one or more baseband processors or control logic to process baseband signals received from a receive signal path of the RF circuitry 206 and to generate baseband signals for a transmit signal path of the RF circuitry 206. Baseband processing circuity 204 may interface with the application circuitry 202 for generation and processing of the baseband signals and for controlling operations of the RF circuitry 206. For example, in some embodiments, the baseband circuitry 204 may include a third generation (3G) baseband processor 204A, a fourth generation (4G) baseband processor 204B, a fifth generation (5G) baseband processor 204C, or other baseband processor(s) 204D for other existing generations, generations in development or to be developed in the future (e.g., second generation (2G), sixth generation (6G), etc.). The baseband circuitry 204 (e.g., one or more of baseband processors 204A-D) may handle various radio control functions that enable communication with one or more radio networks via the RF circuitry 206. In other embodiments, some or all of the functionality of baseband processors 204A-D may be included in modules stored in the memory 204G and executed via a Central Processing Unit (CPU) 204E. The radio control functions may include, but are not limited to, signal modulation/demodulation, encoding/decoding, radio frequency shifting, etc. In some embodiments, modulation/demodulation circuitry of the baseband circuitry 204 may include Fast-Fourier Transform (FFT), precoding, or constellation mapping/demapping functionality. In some embodiments, encoding/decoding circuitry of the baseband circuitry 204 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 204 may include one or more audio digital signal processor(s) (DSP) 204F. The audio DSP(s) 204F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 204 and the application circuitry 202 may be implemented together such as, for example, on a system on a chip (SOC).

In some embodiments, the baseband circuitry 204 may provide for communication compatible with one or more radio technologies. For example, in some embodiments, the baseband circuitry 204 may support communication with an evolved universal terrestrial radio access network (EUTRAN) or other wireless metropolitan area networks (WMAN), a wireless local area network (WLAN), a wireless personal area network (WPAN). Embodiments in which the baseband circuitry 204 is configured to support radio communications of more than one wireless protocol may be referred to as multi-mode baseband circuitry.

RF circuitry 206 may enable communication with wireless networks using modulated electromagnetic radiation through a non-solid medium. In various embodiments, the RF circuitry 206 may include switches, filters, amplifiers, etc. to facilitate the communication with the wireless network. RF circuitry 206 may include a receive signal path which may include circuitry to down-convert RF signals received from the FEM circuitry 208 and provide baseband signals to the baseband circuitry 204. RF circuitry 206 may also include a transmit signal path which may include circuitry to up-convert baseband signals provided by the baseband circuitry 204 and provide RF output signals to the FEM circuitry 208 for transmission.

In some embodiments, the receive signal path of the RF circuitry 206 may include mixer circuitry 206a, amplifier circuitry 206b and filter circuitry 206c. In some embodiments, the transmit signal path of the RF circuitry 206 may include filter circuitry 206c and mixer circuitry 206a. RF circuitry 206 may also include synthesizer circuitry 206d for synthesizing a frequency for use by the mixer circuitry 206a of the receive signal path and the transmit signal path. In some embodiments, the mixer circuitry 206a of the receive signal path may be configured to down-convert RF signals received from the FEM circuitry 208 based on the synthesized frequency provided by synthesizer circuitry 206d. The amplifier circuitry 206b may be configured to amplify the down-converted signals and the filter circuitry 206c may be a low-pass filter (LPF) or bandpass filter (BPF) configured to remove unwanted signals from the down-converted signals to generate output baseband signals. Output baseband signals may be provided to the baseband circuitry 204 for further processing. In some embodiments, the output baseband signals may be zero-frequency baseband signals, although this is not a requirement. In some embodiments, mixer circuitry 206a of the receive signal path may comprise passive mixers, although the scope of the embodiments is not limited in this respect.

In some embodiments, the mixer circuitry 206a of the transmit signal path may be configured to up-convert input baseband signals based on the synthesized frequency provided by the synthesizer circuitry 206d to generate RF output signals for the FEM circuitry 208. The baseband signals may be provided by the baseband circuitry 204 and may be filtered by filter circuitry 206c.

In some embodiments, the mixer circuitry 206a of the receive signal path and the mixer circuitry 206a of the transmit signal path may include two or more mixers and may be arranged for quadrature downconversion and upconversion, respectively. In some embodiments, the mixer circuitry 206a of the receive signal path and the mixer circuitry 206a of the transmit signal path may include two or more mixers and may be arranged for image rejection (e.g., Hartley image rejection). In some embodiments, the mixer circuitry 206a of the receive signal path and the mixer circuitry 206a may be arranged for direct downconversion and direct upconversion, respectively. In some embodiments, the mixer circuitry 206a of the receive signal path and the mixer circuitry 206a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 206 may include analog-to-digital converter (ADC) and digital-to-analog converter (DAC) circuitry and the baseband circuitry 204 may include a digital baseband interface to communicate with the RF circuitry 206.

In some dual-mode embodiments, a separate radio IC circuitry may be provided for processing signals for each spectrum, although the scope of the embodiments is not limited in this respect.

In some embodiments, the synthesizer circuitry 206d may be a fractional-N synthesizer or a fractional N/N+1 synthesizer, although the scope of the embodiments is not limited in this respect as other types of frequency synthesizers may be suitable. For example, synthesizer circuitry 206d may be a delta-sigma synthesizer, a frequency multiplier, or a synthesizer comprising a phase-locked loop with a frequency divider.

The synthesizer circuitry 206d may be configured to synthesize an output frequency for use by the mixer circuitry 206a of the RF circuitry 206 based on a frequency input and a divider control input. In some embodiments, the synthesizer circuitry 206d may be a fractional N/N+1 synthesizer.

In some embodiments, frequency input may be provided by a voltage controlled oscillator (VCO), although that is not a requirement. Divider control input may be provided by either the baseband circuitry 204 or the applications processor 202 depending on the desired output frequency. In some embodiments, a divider control input (e.g., N) may be determined from a look-up table based on a channel indicated by the applications processor 202.

Synthesizer circuitry 206d of the RF circuitry 206 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 206d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 206 may include an IQ/polar converter.

FEM circuitry 208 may include a receive signal path which may include circuitry configured to operate on RF signals received from one or more antennas 210, amplify the received signals and provide the amplified versions of the received signals to the RF circuitry 206 for further processing. FEM circuitry 208 may also include a transmit signal path which may include circuitry configured to amplify signals for transmission provided by the RF circuitry 206 for transmission by one or more of the one or more antennas 210. In various embodiments, the amplification through the transmit or receive signal paths may be done solely in the RF circuitry 206, solely in the FEM 208, or in both the RF circuitry 206 and the FEM 208.

In some embodiments, the FEM circuitry 208 may include a TX/RX switch to switch between transmit mode and receive mode operation. The FEM circuitry may include a receive signal path and a transmit signal path. The receive signal path of the FEM circuitry may include an LNA to amplify received RF signals and provide the amplified received RF signals as an output (e.g., to the RF circuitry 206). The transmit signal path of the FEM circuitry 208 may include a power amplifier (PA) to amplify input RF signals (e.g., provided by RF circuitry 206), and one or more filters to generate RF signals for subsequent transmission (e.g., by one or more of the one or more antennas 210).

In some embodiments, the PMC 212 may manage power provided to the baseband circuitry 204. In particular, the PMC 212 may control power-source selection, voltage scaling, battery charging, or DC-to-DC conversion. The PMC 212 may often be included when the device 200 is capable of being powered by a battery, for example, when the device is included in a UE. The PMC 212 may increase the power conversion efficiency while providing desirable implementation size and heat dissipation characteristics.

While FIG. 2 shows the PMC 212 coupled only with the baseband circuitry 204. However, in other embodiments, the PMC 2 12 may be additionally or alternatively coupled with, and perform similar power management operations for, other components such as, but not limited to, application circuitry 202, RF circuitry 206, or FEM 208.

In some embodiments, the PMC 212 may control, or otherwise be part of, various power saving mechanisms of the device 200. For example, if the device 200 is in an RRC_Connected state, where it is still connected to the RAN node as it expects to receive traffic shortly, then it may enter a state known as Discontinuous Reception Mode (DRX) after a period of inactivity. During this state, the device 200 may power down for brief intervals of time and thus save power.

If there is no data traffic activity for an extended period of time, then the device 200 may transition off to an RRC_Idle state, where it disconnects from the network and does not perform operations such as channel quality feedback, handover, etc. The device 200 goes into a very low power state and it performs paging where again it periodically wakes up to listen to the network and then powers down again. The device 200 may not receive data in this state, in order to receive data, it must transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 202 and processors of the baseband circuitry 204 may be used to execute elements of one or more instances of a protocol stack. For example, processors of the baseband circuitry 204, alone or in combination, may be used execute Layer 3, Layer 2, or Layer 1 functionality, while processors of the application circuitry 204 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

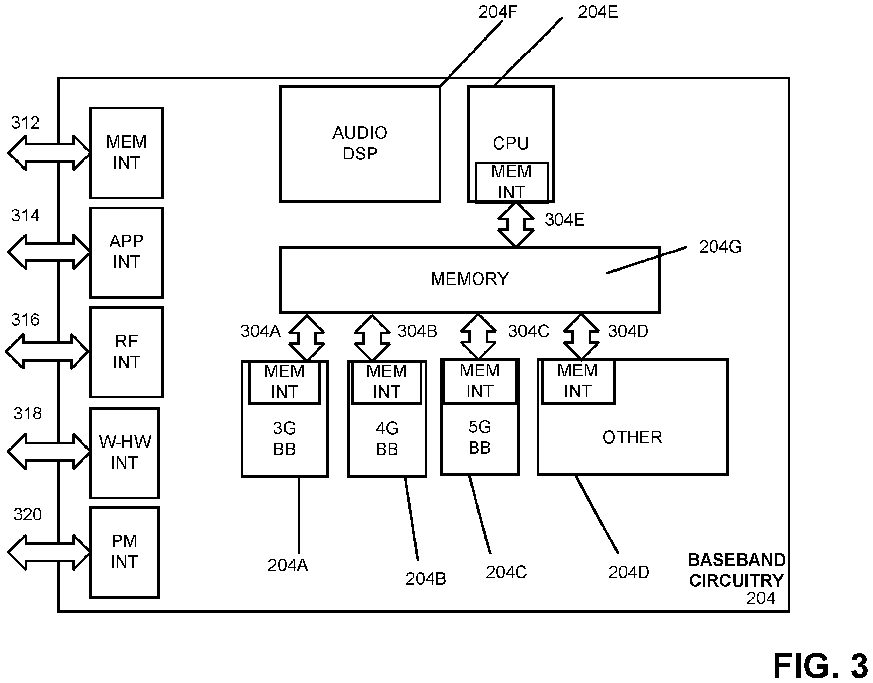

**FIG. 3** illustrates example interfaces of baseband circuitry in accordance with some embodiments. As discussed above, the baseband circuitry 204 of FIG. 2 may comprise processors 204A-204E and a memory 204G utilized by said processors. Each of the processors 204A-204E may include a memory interface, 304A-304E, respectively, to send/receive data to/from the memory 204G.

The baseband circuitry 204 may further include one or more interfaces to communicatively couple to other circuitries/devices, such as a memory interface 312 (e.g., an interface to send/receive data to/from memory external to the baseband circuitry 204), an application circuitry interface 314 (e.g., an interface to send/receive data to/from the application circuitry 202 of FIG. 2), an RF circuitry interface 316 (e.g., an interface to send/receive data to/from RF circuitry 206 of FIG. 2), a wireless hardware connectivity interface 318 (e.g., an interface to send/receive data to/from Near Field Communication (NFC) components, Bluetooth® components (e.g., Bluetooth® Low Energy), Wi-Fi® components, and other communication components), and a power management interface 320 (e.g., an interface to send/receive power or control signals to/from the PMC 212).

In various aspects, techniques discussed herein can be employed to facilitate sTTI (shortened TTI (Transmission Time Interval)) operations. These techniques can include: (a) subframe-pairing-based sTTI indexing method and DL (Downlink) HARQ (Hybrid ARQ (Automatic Repeat Request)) timeline design, which can consider a varied size of the PDCCH (Physical Downlink Control Channel) control region in DL and opportunistic presence of SRS (Sounding Reference Signal) in UL (Uplink); (b) bundling-window-based sPUSCH (sTTI PUSCH (Physical Uplink Shared Channel)) scheduling time which can allow for full flexibility of sPUSCH scheduling and can implement a HARQ-ACK (Acknowledgement) payload size adaptation function for some DL/UL sTTIs combinations; (c) detailed floating HARQ-ACK timeline for sPDSCH (sTTI PDSCH (Physical Downlink Shared Channel)) such that a network can dynamically adjust delay between sPDSCH and corresponding HARQ-ACK feedback by controlling its TBS (TB (Transport Block) Size); (d) mechanism of multi-sTTIs scheduling for scenarios wherein a longer DL TTI (e.g., 4-symbol sTTI) is paired with a relatively short UL sTTI (e.g., 2-symbol).

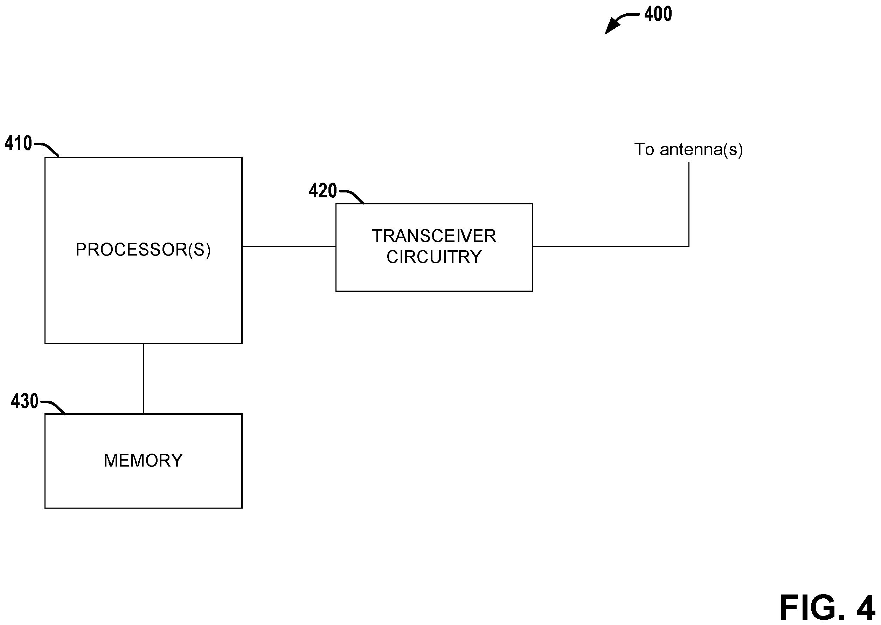

Referring to **FIG. 4,** illustrated is a block diagram of a system 400 employable at a UE (User Equipment) that facilitates communication based on a sTTI (shortened TTI (Transmission Time Interval)), according to various aspects described herein. System 400 can include one or more processors 410 (e.g., one or more baseband processors such as one or more of the baseband processors discussed in connection with FIG. 2 and/or FIG. 3) comprising processing circuitry and associated memory interface(s) (e.g., memory interface(s) discussed in connection with FIG. 3), transceiver circuitry 420 (e.g., comprising one or more of transmitter circuitry or receiver circuitry, which can employ common circuit elements, distinct circuit elements, or a combination thereof), and a memory 430 (which can comprise any of a variety of storage mediums and can store instructions and/or data associated with one or more of processor(s) 410 or transceiver circuitry 420). In various aspects, system 400 can be included within a user equipment (UE). As described in greater detail below, system 400 can facilitate communication and HARQ-ACK feedback based on sTTIs.

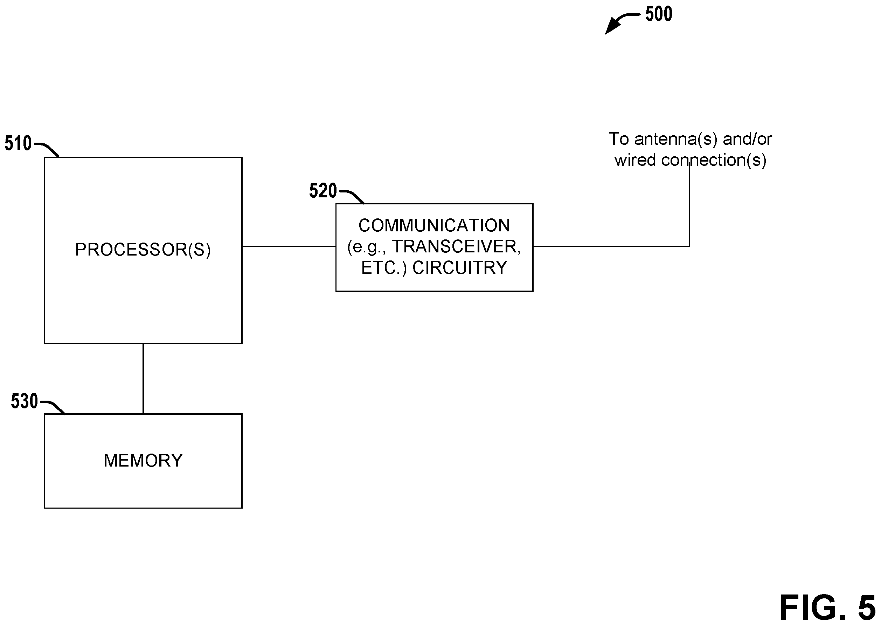

Referring to **FIG. 5,** illustrated is a block diagram of a system 500 employable at a BS (Base Station) that facilitates communication based on a sTTI, according to various aspects described herein. System 600 can include one or more processors 510 (e.g., one or more baseband processors such as one or more of the baseband processors discussed in connection with FIG. 2 and/or FIG. 3) comprising processing circuitry and associated memory interface(s) (e.g., memory interface(s) discussed in connection with FIG. 3), communication circuitry 520 (e.g., which can comprise circuitry for one or more wired (e.g., X2, etc.) connections and/or transceiver circuitry that can comprise one or more of transmitter circuitry (e.g., associated with one or more transmit chains) or receiver circuitry (e.g., associated with one or more receive chains), wherein the transmitter circuitry and receiver circuitry can employ common circuit elements, distinct circuit elements, or a combination thereof), and memory 530 (which can comprise any of a variety of storage mediums and can store instructions and/or data associated with one or more of processor(s) 510 or communication circuitry 520). In various aspects, system 500 can be included within an Evolved Universal Terrestrial Radio Access Network (E-UTRAN) Node B (Evolved Node B, eNodeB, or eNB), next generation Node B (gNodeB or gNB) or other base station in a wireless communications network. In some aspects, the processor(s) 510, communication circuitry 520, and the memory 530 can be included in a single device, while in other aspects, they can be included in different devices, such as part of a distributed architecture. As described in greater detail below, system 500 can facilitate scheduling and communication via sTTIs.

In various aspects discussed herein, techniques can be employed to reduce latency in wireless communication systems employing a sTTI (shortened TTI (Transmission Time Interval)).

From a link layer perspective, the key contributing factor to latency is the round-trip delay (RTD) or round-trip time (RTT) between a packet transmission and an acknowledgement of the packet reception. The RTT is typically defined as a number of Transmission Time Intervals (TTIs), where a TTI is the time duration upon which scheduling is performed. The RTT can determine the overall automatic repeat request (ARQ) design, including design parameters such as the delay between a first and subsequent retransmission and the number of parallel HARQ processes. Thus, a reduction in latency with the focusing on TTI shortening can significantly improve user experience a wireless communication system (e.g., in a Rel-14 LTE system).

In 3GPP, the shortened TTI (sTTI) lengths can be employed and support has been agreed upon for 2-symbol and 1-slot sTTI for sPDSCH (sTTI PDSCH (Physical Downlink Shared Channel)/sPDCCH (sTTI PDCCH (Physical Downlink Control Channel) channels and 2-symbol/4-symbol/1-slot sTTI for sPUCCH (sTTI PUCCH (Physical Uplink Control Channel)/sPUSCH (sTTI PUSCH (Physical Uplink Shared Channel) for FDD (Frequency Division Duplexing) systems. For LTE TDD (Time Division Duplexing) systems, support for only 1-slot sTTI was agreed upon for these channels in Rel-14. Table 1 lists six possible combinations of these supported DL sTTIs (e.g., comprising data and/or control signaling generated by processor(s) 510, transmitted via communication circuitry 520, received via transceiver circuitry 420, and processed by processor(s) 410) and UL sTTIs (e.g., comprising data and/or control signaling generated by processor(s) 410, transmitted via transceiver circuitry 420, received via communication circuitry 520, and processed by processor(s) 510).

Table 1: Combinations of DL sTTIs and UL sTTIs

| | | UL sTTI length | | |
|---|---|---|---|---|
| | | 2-symbol | 4-symbol | 7-symbol |
| DL sTTI length | 2-symbol | Case 1 | Case 2 | Case 3 |
| | 7-symbol | Case 4 | Case 5 | Case 6 |

In various aspects discussed herein, HARQ timelines specified herein can be employed (e.g., by processor(s) 410 and/or processor(s) 510) to evenly distribute UL control overhead across a set of UL sTTIs. Aspects employing these HARQ timelines can consider UE processing capability (e.g., UE employing system 400) and the tradeoff between latency and implementation complexity, for example, for the case of combination of different TTI lengths in DL and UL (e.g., Case 2 in Table 1). In addition, in various aspects, similar to DL, sPUSCH scheduling timelines discussed herein can be employed (e.g., by processor(s) 410 and/or processor(s) 510), which can allow for full scheduling flexibility to achieve a minimized latency performance.

Various aspects discussed herein include techniques that can be employed in wireless communication to support sTTI operations in DL and/or UL within a wireless communication system (e.g., a LTE system).

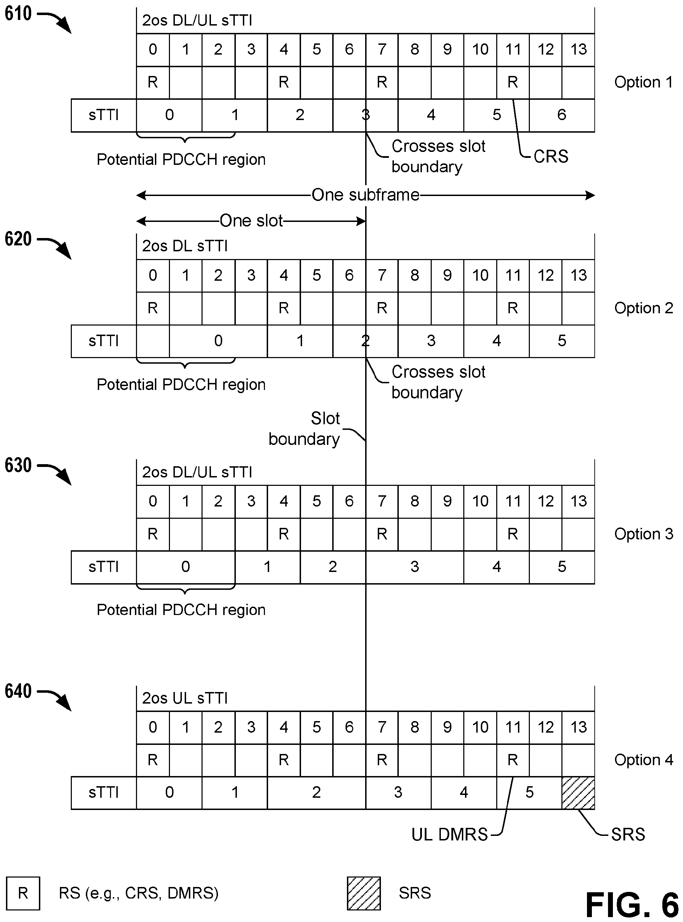

Each subframe can comprise $n_{sTTI}$ sTTIs, numbered from 0 to $n_{sTTI}$ - 1, which can be varied depending on the sTTI length and the number of OFDM symbols used for transmission of PDCCHs in a subframe. Referring to **FIG. 6,** illustrated are four examples of sTTI indexing, according to various aspects discussed herein.

As shown in option 1 (at 610), each subframe can equally comprise seven sTTIs and each sTTI #$i$ can comprise symbols $2i$ and $2i + 1$. This 2-symbol sTTI structure can be commonly applied for both UL (e.g., generated by processor(s) 410, transmitted via transceiver circuitry 420, received via communication circuitry 520, and processed by processor(s) 510) and DL (e.g., generated by processor(s) 510, transmitted via communication circuitry 520, received via transceiver circuitry 420, and processed by processor(s) 410). Alternatively, as shown in option 2 (at 620) and option 3 (at 630) below, OFDM (Orthogonal Frequency Division Multiplexing) symbols in a subframe can be unequally divided into six sTTIs ranging from #0 to #5 with each containing two symbols, except sTTI 0 in option 2 and sTTIs 0 and 3 in option 3. The actual number of OFDM symbols available for data transmission can be varied from 0 to 3 in the sTTI #0 in options 2 and 3, depending on the number of symbols used for the PDCCH region (e.g., 1, 2 or 3 symbols). In options 1 and 2, one sTTI spans across the slot boundary within a subframe (sTTI #3 in option 1 and sTTI #2 in option 2), as illustrated in FIG. 6. A sTTI across the slot boundary can makes it difficult to flexibly TDM (e.g., via processor(s) 510) the 2-symbols sTTI and slot-based sTTI on the same RBs within a subframe, which can interfere with optimal resource utilization in some scenarios, for example, when there are only a small number of UE configured with sTTIs. To obviate this disadvantage and facilitate TDM (e.g., by processor(s) 510) of 2-symbol sTTI(s) and slot-based sTTI(s), option 3 can be employed, wherein a sTTI can be symmetrically defined across two slots within a subframe. The symmetric structure can simplify the definition of UL grant timing and DL HARQ timeline for sTTI operations.

In LTE, the last symbol of a subframe can be used for SRS (Sounding Reference Signal) transmissions by legacy UEs. In options 1-3, the last sTTI cannot be used for sTTI operation in subframes with SRS presence. To simplify the HARQ timeline design and to avoid restriction to the scheduler, an alternative sTTI indexing pattern for UL sTTI indexing can be used (e.g., by processor(s) 410 and/or processor(s) 510), illustrated as option 4 (at 640) in FIG. 6. In the design of option 4, the last sTTI within a subframe (sTTI #5 in option 4) can be defined to comprise at least 3 symbols and therefore can be always used (e.g., sPUCCH generated by processor(s) 410, transmitted via transceiver circuitry 420, received via communication circuitry 520, and processed by processor(s) 510) for sTTI transmissions (e.g., sPUCCH, etc. generated by processor(s) 410, transmitted via transceiver circuitry 420, received via communication circuitry 520, and processed by processor(s) 510) regardless of the presence of SRS in a UL subframe. In other aspects, option 4 can be employed as a DL subframe, wherein an initial number of symbols (e.g., 2, etc.) can be employed for PDCCH and UL indexing. In various aspects, combinations of two or more of these optiopns can be employed, based on techniques discussed herein. For example, in some designs, the first slot of Option 3 and a second slot of Option 4 can be employed as a DL or UL subframe for sTTI indexing, which can be further used for HARQ and scheduling timeline designs.

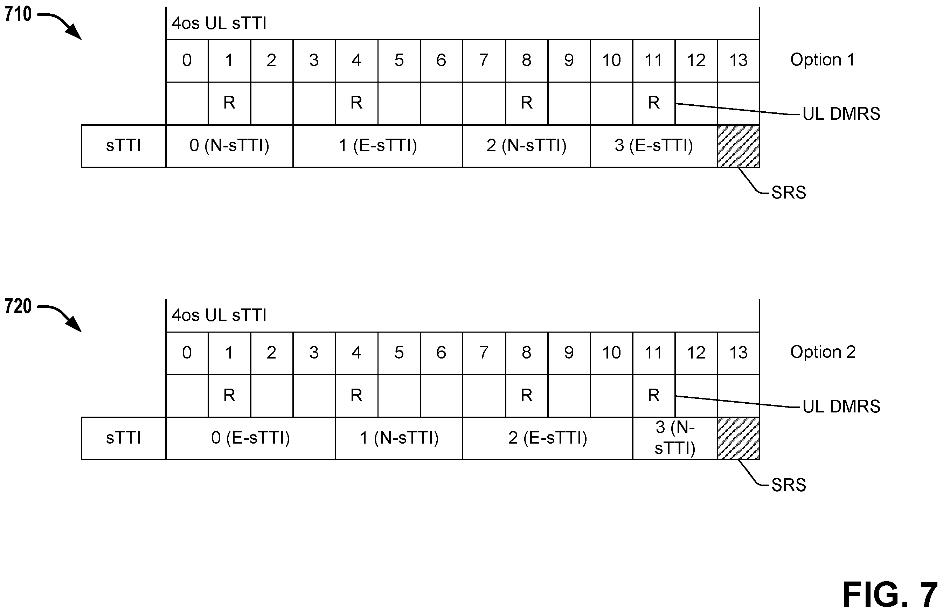

In various aspects, a subframe may be divided into four 4-symbols sTTIs with each containing either 3 or 4 symbols to avoid sTTI spanning across the slot boundary. Referring to **FIG. 7,** illustrated is a pair of diagrams showing example sTTI designs for 4-symbol sTTIs, according to various aspects discussed herein. The RS (Reference Signal(s)) of the 3-symbol sTTI can be transmitted in one data or RS symbol of a 4-symbol sTTI in a CDM (Code Division Multiplexing) manner. As one example, the RS of sTTI #1 (e.g., generated by processor(s) 410) in option 2 (at 720) can be transmitted (e.g., by transceiver circuitry 420) in symbol #3 of sTTI #0 by using an orthogonal sequence. Alternatively, the RS for different sTTIs (e.g., generated by processor(s) 410) in the same slot can be transmitted (e.g., via transceiver circuitry 420) in a same symbol (e.g., symbol #3) for the first slot and in symbol #10 for a second slot by using different CAZAC (Constant Amplitude Zero AutoCorrelation) sequences to achieve orthogonality. This structure can also allow for a lower control overhead by supporting multiplexing between sPUCCH and legacy PUCCH formats (e.g., formats 2/3/5). Alternatively, to enable multiplexing between 2-symbols sPUCCH and 4-symbols sPUCCH transmissions, option 2 (at 710) in FIG. 7 can be considered for 4-symbol sTTI indexing in order to minimize the overall UL control overhead. For example, the sTTI #0 and sTTI #2 for 4-symbol sTTI of option 2 in FIG. 7 (at 720) can be formed by directly merging the 2-symbols <sTTI #0, sTTI #1> and <sTTI #3, sTTI #4> in option 4 (at 640) of FIG. 6, respectively. As used herein, in connection with UL 4-symbol sTTI operations, an sTTI with a relatively larger number of symbols (e.g., 4 symbols) can be referred to herein as extended sTTI (E-sTTI) and an sTTI with a smaller number of symbols (e.g., 3 symbols) can be referred to herein as normal sTTI (N-sTTI). Using this terminology, in option 2 (at 720), for example, sTTI #1 and #3 can be N-sTTIs

while sTTI #0 and #2 can be E-sTTI.

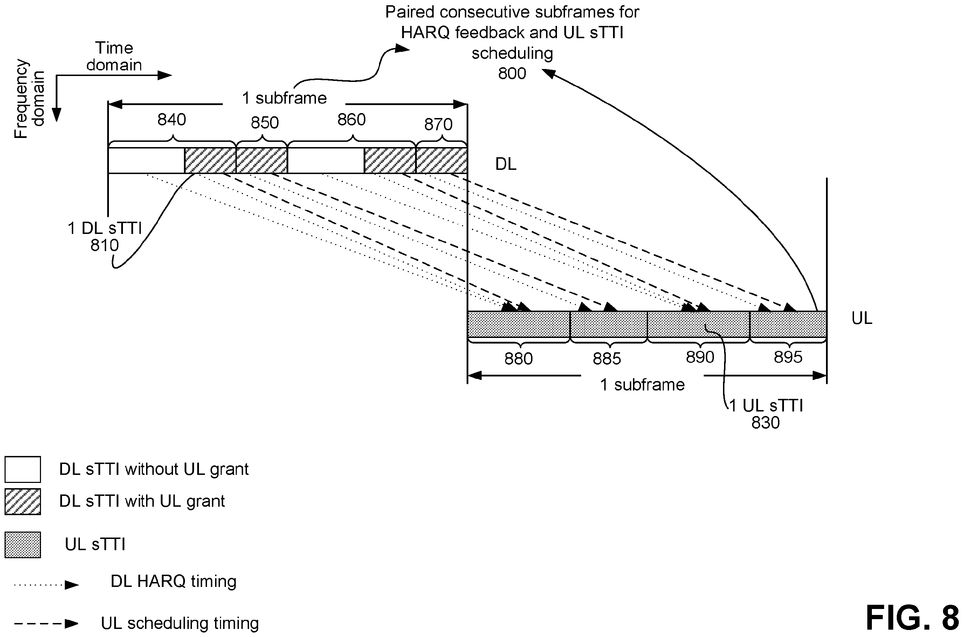

In various aspects, for sTTI operation, a set of DL sTTIs (e.g., one or more $D_i$) and UL sTTI (e.g., $U_i$) pairs can be formed (e.g., by $\langle [D_0, D_1, \cdots, D_{k-1}], U_0 \rangle$, wherein $k$ is a positive integer (e.g., 1 or more)) and can be predefined (e.g., in a specification) based on UE processing time (e.g., of a UE employing system 400). This design can distribute HARQ-ACK payloads (e.g., generated by processor(s) 410, transmitted via transceiver circuitry 420, received via communication circuitry 520, and processed by processor(s) 510) of one DL subframe (e.g., DL subframe n, which can be generated by processor(s) 510, transmitted via communication circuitry 520, received via transceiver circuitry 420, and processed by processor(s) 410) over all available UL sTTIs in the paired UL subframe (e.g., UL subframe n+1 generated by processor(s) 410, transmitted via transceiver circuitry 420, received via communication circuitry 520, and processed by processor(s) 510) as evenly as possible to improve the resource utilization of the UL spectrum. Referring to **FIG. 8,** illustrated is a diagram of an example design 800 involving HARQ-ACK payloads of one DL subframe distributed over all available UL sTTIs in a paired UL subframe, according to various aspects discussed herein. In design 800 of FIG. 8, a set of DL sTTIs can be grouped into bundling windows 840-870 of unequal size can be formed (e.g., by processor(s) 510) to evenly distribute HARQ payloads over UL sTTIs 880-895 within the paired UL subframe (e.g., generated by processor(s) 410). The bundling window size can be varied (e.g., by processor(s) 510 or based on predefined values, etc.) depending on the paired DL and UL sTTI length(s). In some designs, the last sTTI (e.g., sTTI 810) within each bundling window (e.g., 840) can be used to schedule sPUSCH transmission in the associated UL sTTI (e.g., 880), for example, a DAI (Downlink Assignment Index)-based mechanism can be employed (e.g., by processor(s) 410 and/or processor(s) 510) to dynamically determine the payload size of HARQ-ACK bits transmitted on the associated UL sTTI 880. Alternatively, the first DL sTTI in a bundling window (e.g. DL sTTI 805 in 840) can be used (e.g., by processor(s) 510) to schedule the sPUSCH transmission in the associated UL sTTI (e.g., UL sTTI 880) in order to leave a relatively longer packing time for UL-SCH, at the cost of larger HARQ-ACK payload size. Furthermore, in some designs, the UL grant (e.g., generated by processor(s) 510) to schedule sPUSCH transmission in the UL sTTI (e.g., 880) can be transmitted (e.g., by communication circuitry 520) in any of the associated DL sTTIs (e.g. DL sTTI 805 or 810) within a bundling window.

Tables 2 and 3, below, show examples of HARQ timelines for the paired 2-symbol DL sTTI and a variety of UL sTTI configurations, including 2-symbol, 4 symbol and 7-symbols UL sTTI. Upon detection (e.g., by processor(s) 410) of a sPDSCH transmission within sTTI $D_i (0 \le i < k)$ intended for a UE, that UE can transmit (e.g., via transceiver circuitry 420) the HARQ-ACK response (e.g., generated by processor(s) 410) in the paired UL sTTI $U_0$, where $k$ can depend on the length of a paired UL sTTI for a respective DL sTTI length. Generally, such a technique can be described as transmitting (e.g., by transceiver circuitry 420) HARQ-ACK responses (e.g., generated by processor(s) 410) in the associated UL sTTI $i$ within subframe n+1 for sPDSCHs received (e.g., by transceiver circuitry 420 for processing by processor(s) 410) in the paired subframe n based on the predefined HARQ timeline defined for each combination of <DL sTTI length, UL sTTI length>.

Table 2: DL and UL sTTI pairs for sPDSCH HARQ-ACK feedback (2-symbol DL sTTI length

| 2-symbol UL sTTI | | HARQ feedback delay (in symbols) | 4-symbol UL sTTI | | HARQ feedback delay (in symbols) |
|---|---|---|---|---|---|
| DL sTTIs | UL sTTI x: $U_0$ | | DL sTTIs | UL sTTI x: $U_0$ | |
| 0 in subframe n-1 | 0 in subframe n | 11 | 0 in subframe n-1 | 0 in subframe n | 12 |
| 1 in subframe n-1 | 1 in subframe n | 11 | <1,2> in subframe n-1 | 1 in subframe n | 13, 10 |
| 2 in subframe n-1 | 2 in subframe n | 11 | 3 in subframe n-1 | 2 in subframe n | 12 |
| 3 in subframe | 3 in subframe | 11 | <4,5> in | 3 in | 13, 10 |
| n-1 | n | | subframe n-1 | subframe n | |

(continued)

| 2-symbol UL sTTI | | HARQ feedback delay (in symbols) | 4-symbol UL sTTI | | HARQ feedback delay (in symbols) |
|---|---|---|---|---|---|
| DL sTTIs | UL sTTI x: $U_0$ | | DL sTTIs | UL sTTI x: $U_0$ | |
| 4 in subframe n-1 | 4 in subframe n | 11 | Note: Assumes option 1 in FIG. 7 where sTTI#1 and 3 is E-sTTI and can be used to convey relatively larger HARQ-ACK payload from multiple sTTIs. | | |
| 5 in subframe n-1 | 5 in subframe n | 11 | | | |

Table 3: DL HARQ timeline (2-symbol DL sTTI length and 7-symbol UL sTTI length)

| | 7-symbol UL sTTI | | HARQ feedback delay (in symbols) |
|---|---|---|---|
| | DL sTTIs | UL sTTI x: $U_0$ | |
| Alt. 1 | <0,1,2> in subframe n-1 | 0 in subframe n | 12, 10, 7 |
| | <3,4,5> in subframe n-1 | 1 in subframe n | 12, 10, 7 |
| Alt. 2 | 5 in subframe n-2 and <0,1> in subframe n-1 | 0 in subframe n | 14, 12, 10 |
| | <2,3,4> in subframe n-1 | 1 in subframe n | 14, 12, 10 |

For the configuration of 2-symbol DL sTTI and 7-symbol UL sTTI, the subframe-pair-based HARQ-ACK feedback can be implemented (e.g., by processor(s) 410 and processor(s) 510) as Alt.1 in Table 3. As shown in the examples of Tables 2 and 3, the latencies experienced by different sTTIs within a bundling window can vary. For example, the latency in Table 3 for sTTI #0 in subframe n-1 is 12 symbols, but is reduced to 7 symbols for sTTI #2. To relax UE processing load (e.g., on processor(s) 410), and also to simplify operations at the eNB scheduler, Alt.2 in Table 3 can be employed. In another design, upon detection (e.g., by processor(s) 410) of a sPDSCH transmission within sTTI $i$ intended for a UE, the UE can transmit (e.g., via transceiver circuitry 420) the HARQ-ACK response (e.g., generated by processor(s) 410) in the first UL sTTI after DL sTTI $i + k,$ where the $k$ value can be determined (e.g., by processor(s) 410 and/or processor(s) 510) at least based on the DL sTTI length.

Although the example fixed HARQ timelines discussed herein can be served as baseline for DL sTTI operation, these timelines are sub-optimal from a latency perspective. For example, in scenarios involving a relatively small TBS (TB (Transport Block) Size), a fixed HARQ timeline or scheduling timeline results in a larger delay. In various aspects, to avoid this, a physical layer signaling mechanism can additionally be applied to allow an eNB to dynamically and flexibly choose (e.g., via processor(s) 510) one of the UL sTTIs, for example, based on the DL transport block size (TBS) and/or the UE-specific timing advance (TA) value. In various aspects, a downlink control information (DCI) format can be used (e.g., selected and generated by processor(s) 510 for transmission by communication circuitry 520) to select one of a set of UL sTTI to use for an UL HARQ-ACK or PUSCH transmission (e.g., generated by processor(s) 410, transmitted via transceiver circuitry 420, received via communication circuitry 520, and processed by processor(s) 510).

Various schemes can be used to signal (e.g., via signaling generated by processor(s) 510, transmitted via communication circuitry 520, received via transceiver circuitry 420, and processed by processor(s) 410) the UL sTTI index information for HARQ-ACK or PUSCH transmission. In some designs, a sTTI offset (SO) value can be semi-statically configured in Radio Resource Control (RRC) signaling (e.g., generated by processor(s) 510, transmitted via communication circuitry 520, received via transceiver circuitry 420, and processed by processor(s) 410) for a particular UE. Alternatively, a set of SO values can be either configured by RRC signaling (e.g., from system 400 to system 500) or fixed in a specification. Table 4 below illustrates some possible mapping rules of SO values. Different SO values can be defined for HARQ-ACK feedback and sPUSCH grants, due to varied processing and use cases. As one example, option 1 in Table 4 can be used for HARQ-ACK feedback (e.g., generated by processor(s) 410, transmitted via transceiver circuitry 420, received via communication circuitry 520, and processed by processor(s) 510) while option 2 can be used for sPUSCH (e.g., generated by processor(s) 410) transmission (e.g., by transceiver circuitry 420). A field (e.g., 1-bit or 2-bits) can be included as an information element (IE) in a DCI message (e.g., generated by processor(s) 510, transmitted via communication circuitry 520, received via transceiver circuitry 420, and processed by processor(s) 410) to indicate the actual UL sTTI relative to a basic SO value (e.g., relative to a fixed timeline) according to an associated DCI format. Upon detection (e.g., by processor(s) 410) by a UE of a sPDSCH transmission (e.g., received by transceiver circuitry 420) or a sPDCCH scheduling sPUSCH transmission (e.g., received by transceiver circuitry 420) in sTTI $D_i(0 \leq i < k)$ intended for the UE, the UE can transmit (e.g., via transceiver circuitry 420) the HARQ-ACK response (e.g., generated by processor(s) 410) or PUSCH transmission (e.g., generated by processor(s) 410) in a UL sTTI $l$, for example, as indicated in equation (1):

$$l = x + \Delta_{so} \qquad (1)$$

The value of $x$ can be determined using the methods disclosed above (e.g., as a fixed value that that can be predetermined, indicated via higher layer signaling, etc.), and $\Delta_{so}$ can be an offset from such a value. The eNB can thereby control (e.g., via processor(s) 510) the latency of PDSCH transmission, as compared to a fixed HARQ timeline, because the HARQ timing can be dynamically controlled by properly setting TBS based on the processing capability of a particular UE to meet the latency target.

Table 4: Mapping of 1-bit or 2-bit UL sTTI offset (SO) Field in DCI formats to $\Delta_{so}$ values

| UL sTTI offset field (1-bit) | $\Delta_{so}$ | UL sTTI offset field (2-bit) | $\Delta_{so}$ | | |
| --- | --- | --- | --- | --- | --- |
| | | | | Opt.1 | Opt.2 |
| 0 | 0 | 00 | $\Delta_0$ | 0 | 0 |
| 1 | -1 | 01 | $\Delta_1$ | -1 | 1 |
| | | 10 | $\Delta_2$ | -2 | 2 |
| | | 11 | $\Delta_3$ | 1 or -4 | 3 |

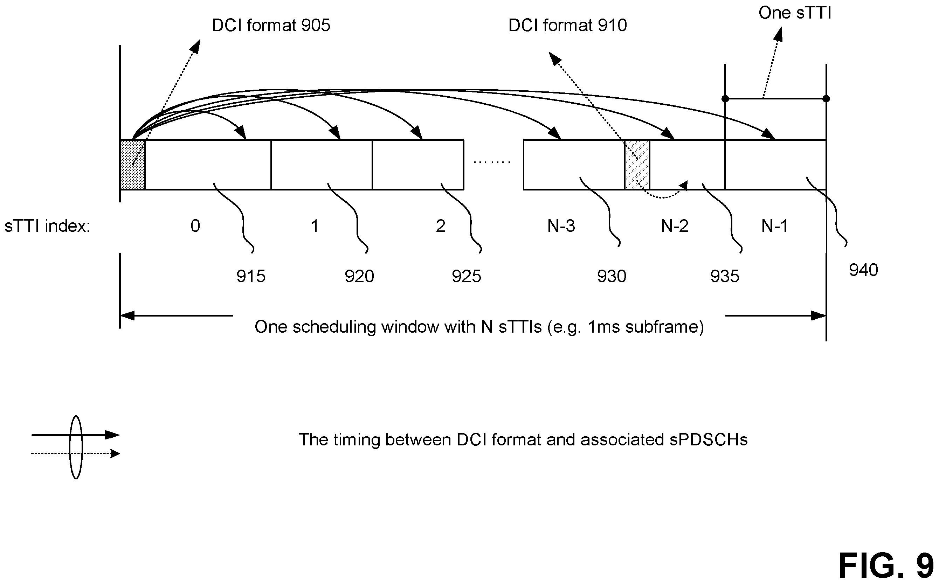

According to some aspects, techniques that can facilitate multi-sTTI scheduling can be employed. Referring to **FIG. 9,** illustrated is a diagram showing an example of multi-sTTI scheduling that can be employed according to various aspects discussed herein. Multi-sTTI scheduling techniques can comprise receiving (e.g., via transceiver circuitry 420), in a first sTTI (e.g., DL sTTI 905 in FIG.9), which can, for example, correspond to a DL control region of a legacy DL subframe, multi-sTTI scheduling information for a set of DL sTTIs (e.g., sTTI 915-940 within the DL subframe of FIG. 9) or a set of UL sTTIs (e.g. sTTIs 880-895 in FIG. 8) within the associated UL subframe. Such multi-sTTIs scheduling can allow for reduced overhead for scheduling DL and UL sTTI transmissions. In some examples, a UE can skip a scheduling of resource associated with the multi-sTTIs scheduling information for the sTTI in a scenario where the UE detects (e.g., via processor(s) 410) a second DCI message (e.g., 910 in FIG. 9) within the sTTI of a predefined scheduling window. In various aspects, multi-sTTI scheduling information of a DCI message (e.g., of DCI message 905) can include a bitmap field with size equal to the number of sTTIs within a scheduling window to indicate which sTTI(s) within it are scheduled for sPDSCH reception or sPUSCH transmission, which can allow for an arbitrary combination of sTTIs to be scheduled (e.g., by processor(s) 510) for a given UE.

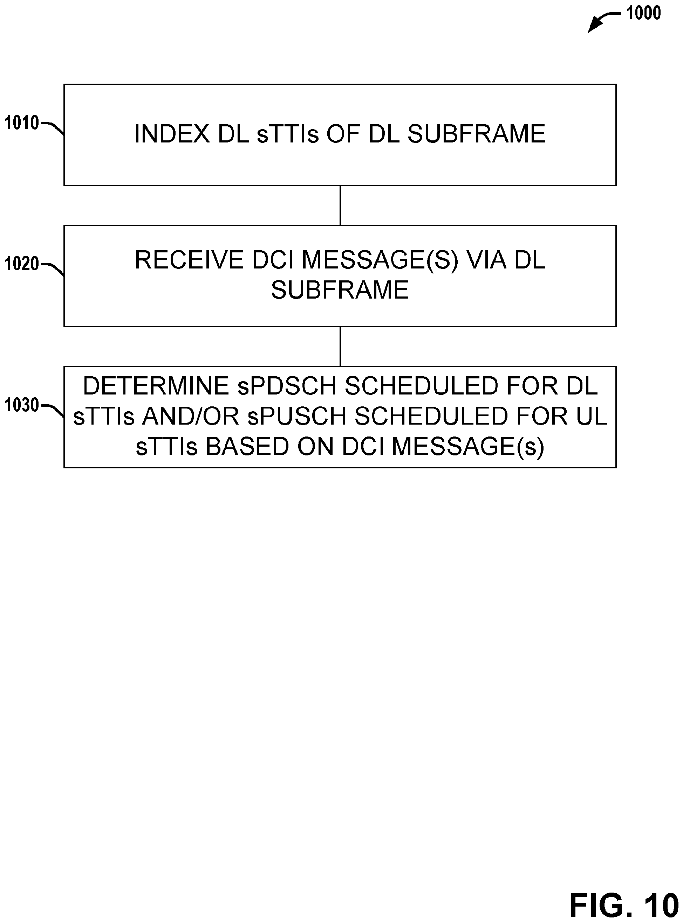

Referring to **FIG. 10,** illustrated is a flow diagram of an example method 1000 employable at a UE that facilitates communication based on sTTIs, according to various aspects discussed herein. In other aspects, a machine readable medium can store instructions associated with method 1000 that, when executed, can cause a UE to perform the acts of method 1000.

At 1010, DL sTTIs of a DL subframe (and UL sTTIs of an associated UL subframe), can be indexed, using techniques discussed herein.

At 1020, one or more DCI messages can be received via the DL subframe.

At 1030, based on the one or more DCI messages, scheduling of sPDSCH for one or more DL sTTIs and/or sPUSCH for one or more UL sTTIs can be determined.

Additionally or alternatively, method 1000 can include one or more other acts described herein in connection with system 400.

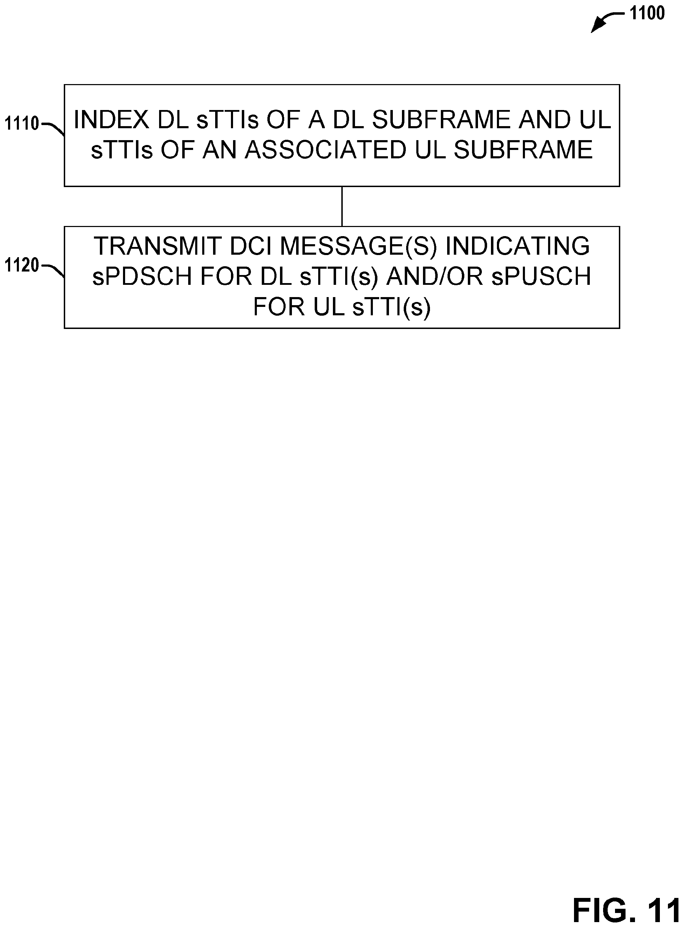

Referring to **FIG. 11,** illustrated is a flow diagram of an example method 1100 employable at a BS that facilitates communication based on sTTIs, according to various aspects discussed herein. In other aspects, a machine readable medium can store instructions associated with method 1100 that, when executed, can cause a BS to perform the acts of method 1100.

At 1110, DL sTTIs of a DL subframe (and UL sTTIs of an associated UL subframe), can be indexed, using techniques discussed herein.

At 1120, one or more DCI messages can be generated and transmitted, which can indicate sPDSCH for one or more DL sTTIs and/or sPUSCH for one or more UL sTTIs.

Additionally or alternatively, method 1100 can include one or more other acts described herein in connection with system 500.

A first example technique for wireless communication for shortened TTI (sTTI) operations can comprise: indexing (e.g., by processor(s) 410 and/or processor(s) 510) a plurality of shortened TTIs (sTTIs) in a subframe at least based on the sTTI length; receiving (e.g., via transceiver circuitry 420) first DCI message(s) and/or second DCI message(s) used to schedule sPDSCH reception (e.g., via transceiver circuitry 420) or sPUSCH transmission (e.g., via transceiver circuitry 420) for a set of sTTIs within a scheduling window; adjusting (e.g., via processor(s) 410) the sPDSCH reception or sPUSCH transmission in a sTTI at least based on the difference between the received first DCI message in the first sTTI of a scheduling window and the received second DCI in a sTTI within a same scheduling window; and determining (e.g., via processor(s) 410) the paired UL sTTI for the HARQ-ACK transmission or sPUSCH transmission at the UE.

In various aspects of the first example technique, indexing the plurality of sTTIs in the subframe can comprise indexing two consecutive symbols 2i and 2i + 1 can be indexed (e.g., by processor(s) 410) as one sTTI *i*.

In various aspects of the first example technique, indexing the plurality of sTTIs in the subframe can comprise indexing (e.g., by processor(s) 410) each sTTI by selecting symbols within one slot. In various such aspects, indexing each sTTI by selecting symbols within one slot can comprise unequally dividing (e.g., via processor(s) 410) OFDM symbols in a subframe into six sTTIs ranging from #0 to #5 with sTTI#0 comprising a first four symbols of the subframe and the other sTTIs comprising 2 symbols. In various such aspects, indexing each sTTI by selecting symbols within one slot can comprise slot-symmetrically dividing (e.g., via processor(s) 410) OFDM symbols in a subframe into six sTTIs ranging from #0 to #5 with sTTI#0 and sTTI#3 comprising the first three symbols in each slot and the other sTTIs comprising 2 symbols. In various such aspects, indexing each sTTI by selecting symbols within one slot can comprise slot-symmetrically dividing (e.g., via processor(s) 410) OFDM symbols in a subframe into six sTTIs ranging from #0 to #5 with sTTI#2 and sTTI#5 comprising the last three symbols in each slot and the other sTTIs comprising 2 symbols.

Various aspects of the first example technique can further comprise receiving (e.g., via transceiver circuitry 420) the second DCI message subsequent to receiving the first DCI message (e.g., which can comprise multi-sTTIs scheduling information) within a scheduling window, wherein the second DCI message can comprise different scheduling information from the first DCI message, wherein the different scheduling information of the second DCI message is associated with a given sTTIs in the scheduling window; and replacing (e.g., via processor(s) 410) the multi-sTTIs scheduling information with this different scheduling information for communication in the given sTTI. In various such aspects, the multi-TTI scheduling information of the first DCI message can comprise a bitmap field with size equal to the number of sTTIs within a scheduling window, wherein the bitmap can indicate which sTTI(s) within the scheduling window are scheduled for sPDSCH reception or sPUSCH transmission.

In further aspects of the first example technique, determining the paired UL sTTI for the HARQ-ACK transmission or sPUSCH transmission can comprise: pairing (e.g., by processor(s) 410) a set of DL sTTIs within a first bundling window of a first DL subframe with a UL sTTI in a first UL subframe; transmitting (e.g., via transceiver circuitry 420) HARQ-ACK feedback (e.g., generated by processor(s) 410) for sPDSCH transmission(s) (e.g., generated by processor(s) 510, transmitted via communication circuitry 520, received via transceiver circuitry 420, and processed by processor(s) 410) in the first bundling window in the paired UL sTTI; and transmitting (e.g., by communication circuitry 520), in a last DL sTTI or a first DL sTTI or any sTTI within the first bundling window, a DCI message (e.g., generated by processor(s) 510) to schedule a sPUSCH transmission in the paired UL sTTI.

In various aspects of the further aspects of the first example technique, a first DL subframe can be subframe n and the paired first UL subframe can be subframe n+1.

Various aspects of the further aspects of the first example technique can further comprise determining (e.g., via processor(s) 410) the DL sTTI bunding windows and the associated UL sTTIs based at least in part on the configuration of DL sTTI length(s) and the paired UL sTTI length(s). In various such aspects, the number of DL sTTI windows in the first DL subframe can be determined (e.g., via processor(s) 410) to equal the number of UL sTTIs in the first UL subframe. In additional such aspects, for 2-symbol DL sTTI and 4-symbol UL sTTI configurations, the first example technique can further comprise: grouping (e.g., via processor(s) 410) sTTI #0 and #1 to form a first sTTI bundling window and using (e.g., via processor(s) 410) UL sTTI #0 for HARQ-ACK feedback (e.g., generated by processor(s) 410, transmitted via transceiver circuitry 420, received via communication circuitry 520, and processed by processor(s) 510); grouping (e.g., via processor(s) 410) sTTI #2 to form a second sTTI bundling window and using (e.g., via processor(s) 410) UL sTTI #1 for HARQ-ACK feedback (e.g., generated by processor(s) 410, transmitted via transceiver circuitry 420, received via communication circuitry 520, and processed by processor(s) 510); grouping (e.g., via processor(s) 410) sTTI #3 and #4 to form a third sTTI bundling window and using (e.g., via processor(s) 410) UL sTTI #2 for HARQ-ACK feedback (e.g., generated by processor(s) 410, transmitted via transceiver circuitry 420, received via communication circuitry 520, and processed by processor(s) 510); and grouping (e.g., via processor(s) 410) sTTI #5 to form a fourth sTTI bundling window and using (e.g., via processor(s) 410) UL sTTI #3 for HARQ-ACK feedback (e.g., generated by processor(s) 410, transmitted via transceiver circuitry 420, received via communication circuitry 520, and processed by processor(s) 510).

Various aspects of the further aspects of the first example technique can further comprise adjusting (e.g., via processor(s) 410) the UL sTTI used for HARQ-ACK for DL transmissions within a bundling window at least based on the paired UL sTTI and a DCI message. In various such aspects, upon detection (e.g., by processor(s) 410) of a sPDSCH transmission or a sPDCCH scheduling sPUSCH transmission in sTTI $D_i(0 \leq i < k)$ intended for the UE, the UE can transmit (e.g., via transceiver circuitry 420) an associated HARQ-ACK response (e.g., generated by processor(s) 410) or PUSCH transmission (e.g., generated by processor(s) 410) in a UL sTTI $l$, wherein $l = x + \Delta_{so}$, wherein $x$ is the paired UL sTTI index, and $\Delta_{so}$ can indicated by means of one field in the DCI message or semi-statically configured by RRC message (e.g., generated by processor(s) 510, transmitted via communication circuitry 520, received via transceiver circuitry 420, and processed by processor(s) 410).

Examples herein can include subject matter such as a method, means for performing acts or blocks of the method, at least one machine-readable medium including executable instructions that, when performed by a machine (e.g., a processor with memory, an application-specific integrated circuit (ASIC), a field programmable gate array (FPGA), or the like) cause the machine to perform acts of the method or of an apparatus or system for concurrent communication using multiple communication technologies according to embodiments and examples described.

## Claims

1. An apparatus (200, 400) configured to be employed in a User Equipment, UE, (101, 102) comprising:

   a memory interface (204G, 430); and
   processing circuitry (204A-204E, 410) configured to:

   index a plurality of Downlink, DL, shortened TTIs, Transmission Time Intervals, sTTIs of a DL subframe based at least in part on symbol lengths of each of the plurality of DL sTTIs, and index the plurality of DL sTTIs by selecting, for each DL sTTI of the plurality of DL sTTIs, a plurality of associated symbols of the DL subframe, wherein the plurality of associated symbols for each DL sTTI comprise symbols from a single slot of the DL subframe;
   decode a first Downlink Control Information, DCI, message from the DL subframe, wherein the DCI comprises a bitmap field comprising n bits, wherein n is equal to the number of sTTIs within the scheduling window, and wherein each bit of the n bits indicates whether an associated sTTI within the scheduling window is scheduled for sPDSCH or sPUSCH;
   determine, based on the first DCI message, at least one of one or more DL sTTIs of the plurality of DL sTTIs that are associated with sPDSCH.

2. The apparatus of claim 1, wherein the plurality of DL sTTIs comprise six DL sTTIs, and wherein the processing circuitry is configured to index the six DL sTTIs by selecting a first three symbols of a first slot of the DL subframe for a first DL sTTI of the six DL sTTIs, selecting two distinct consecutive symbols of the first slot of the DL subframe for each of a second DL sTTI and a third DL sTTI of the six DL sTTIs, selecting a first three symbols of a second slot of the DL subframe for a fourth DL sTTI of the six DL sTTIs, and selecting two distinct consecutive symbols of the second slot of the DL subframe for each of a fifth DL sTTI and a sixth DL sTTI of the six DL sTTIs.

3. The apparatus of claim 2, wherein the first DL sTTI comprises Physical Downlink Control Channel, PDCCH, in a first symbol of the DL subframe or a first three symbols of the DL subframe.

4. The apparatus of claim 1, wherein the plurality of DL sTTIs comprise six DL sTTIs, and wherein the processing circuitry is configured to index the six DL sTTIs by selecting two distinct consecutive symbols of the first slot of the DL subframe for each of a first DL sTTI and a second DL sTTI of the six DL sTTIs, selecting a final three symbols of a first slot of the DL subframe for a third DL sTTI of the six DL sTTIs, selecting two distinct consecutive symbols of the second slot of the DL subframe for each of a fourth DL sTTI and a fifth DL sTTI of the six DL sTTIs, and selecting a final three symbols of a second slot of the DL subframe for a sixth DL sTTI of the six DL sTTIs.

5. The apparatus of claim 2, wherein the first DL sTTI comprises PDCCH (Physical Downlink Control Channel) in a first two symbols of the DL subframe.

6. The apparatus of claim 1, wherein the plurality of DL sTTIs comprises seven DL sTTIs, and wherein the processing circuitry is configured to index the seven DL sTTIs by selecting two distinct consecutive symbols of the DL subframe for each DL sTTI of the seven DL sTTIs.

7. The apparatus of claim 1, wherein the plurality of DL sTTIs comprises six DL sTTIs, and wherein the processing circuitry is configured to index the six DL sTTIs by selecting a first four symbols of the DL subframe for a first DL sTTI of the six DL sTTIs, and selecting two distinct consecutive symbols for each other DL sTTI of the six DL sTTIs.

8. The apparatus of any of Claims 1-7, wherein the multi-sTTI scheduling information indicates sPDSCH for two or more sTTIs of the plurality of DL sTTIs.

9. The apparatus of claim 8, wherein the processing circuitry is further configured to:

decode a second DCI message from the DL subframe, wherein the second DCI message comprises additional scheduling information associated with a subset of the scheduling window; and
replace a portion of the multi-scheduling information associated with the subset of the scheduling window with the additional scheduling information.

10. An apparatus configured to be employed in a Base Station, BS, comprising:

a memory interface; and
processing circuitry configured to:

index a plurality of Downlink, DL, shortened TTIs, Transmission Time Intervals, sTTIs of a DL subframe based at least in part on symbol lengths of each of the plurality of DL sTTIs;
encode a first Downlink Control Information, DCI, message associated with a first User Equipment, UE, that indicates at least one of sTTI Physical Downlink Shared Channel, sPDSCH, for one or more DL sTTIs of the DL subframe, wherein the first DCI message comprises a bitmap field comprising n bits, wherein n is equal to the number of sTTIs within the scheduling window, and wherein each bit of the n bits indicates whether an associated sTTI within the scheduling window is scheduled for sPDSCH or sPUSCH;

wherein the processing circuitry is configured to index the plurality of DL sTTIs by selecting, for each DL sTTI of the plurality of DL sTTIs, a plurality of associated symbols of the DL subframe, wherein the plurality of associated symbols for each DL sTTI comprise symbols from a single slot of the DL subframe.

11. The apparatus of claim io, wherein the plurality of DL sTTIs comprise six DL sTTIs, and wherein the processing circuitry is configured to index the six DL sTTIs by selecting a first three symbols of a first slot of the DL subframe for a first DL sTTI of the six DL sTTIs, selecting two distinct consecutive symbols of the first slot of the DL subframe for each of a second DL sTTI and a third DL sTTI of the six DL sTTIs, selecting a first three symbols of a second slot of the DL subframe for a fourth DL sTTI of the six DL sTTIs, and selecting two distinct consecutive symbols of the second slot of the DL subframe for each of a fifth DL sTTI and a sixth DL sTTI of the six DL sTTIs.

12. The apparatus of claim 11, wherein the first DL sTTI comprises PDCCH (Physical Downlink Control Channel) in a first symbol of the DL subframe or a first three symbols of the DL subframe.

13. The apparatus of claim 10, wherein the plurality of DL sTTIs comprise six DL sTTIs, and wherein the processing circuitry is configured to index the six DL sTTIs by selecting two distinct consecutive symbols of the first slot of the DL subframe for each of a first DL sTTI and a second DL sTTI of the six DL sTTIs, selecting a final three symbols of a first slot of the DL subframe for a third DL sTTI of the six DL sTTIs, selecting two distinct consecutive symbols of the second slot of the DL subframe for each of a fourth DL sTTI and a fifth DL sTTI of the six DL sTTIs, and selecting a final three symbols of a second slot of the DL subframe for a sixth DL sTTI of the six DL sTTIs.

14. The apparatus of claim 11, wherein the first DL sTTI comprises PDCCH, Physical Downlink Control Channel, in a first two symbols of the DL subframe.

**Patentansprüche**

1. Vorrichtung (200, 400), die konfiguriert ist, um in einer Benutzervorrichtung, UE, (101, 102) verwendet zu werden, wobei die Benutzervorrichtung umfasst:

eine Speicherschnittstelle (204G, 430); und
eine Verarbeitungsschaltung (204A-204E, 410), die konfiguriert ist zum:

Indizieren einer Vielzahl von Downlink, DL, verkürzten TTIs, Übertragungszeitintervallen, sTTIs eines DL-Teilrahmens zumindest teilweise auf der Grundlage von Symbollängen jedes der Vielzahl von DL sTTIs, und Indizieren der Vielzahl von DL sTTIs durch Auswählen einer Vielzahl von zugehörigen Symbolen des DL-Teilrahmens für jedes DL sTTI der Vielzahl von DL sTTIs, wobei die Vielzahl von zugehörigen Symbolen für jedes DL sTTI Symbole aus einem einzelnen Schlitz des DL-Teilrahmens umfasst;

Dekodieren einer ersten Downlink-Kontrollinformationsnachricht, DCI, aus dem DL-Teilrahmen, wobei die DCI ein Bitmap-Feld mit n Bits umfasst, wobei n gleich der Anzahl von sTTIs innerhalb des Planungsfensters ist und wobei jedes Bit der n Bits anzeigt, ob ein zugehöriges sTTI innerhalb des Planungsfensters für sPDSCH oder sPUSCH geplant ist;

Bestimmen, basierend auf der ersten DCI-Nachricht, mindestens einer von einem oder mehreren DL sTTIs der Vielzahl von DL sTTIs, die mit sPDSCH verbunden sind.

2. Vorrichtung nach Anspruch 1, wobei die Vielzahl von DL sTTIs sechs DL sTTIs umfasst und wobei die Verarbeitungsschaltung konfiguriert ist zum Indizieren der sechs DL sTTIs, indem sie die ersten drei Symbole eines ersten Schlitzes des DL-Teilrahmens für einen ersten DL sTTI der sechs DL sTTIs auswählt, Auswählen von zwei verschiedenen aufeinanderfolgenden Symbolen des ersten Schlitzes des DL-Teilrahmens für ein zweites DL sTTI und ein drittes DL sTTI der sechs DL sTTIs, Auswählen von ersten drei Symbolen eines zweiten Schlitzes des DL-Teilrahmens für ein viertes DL sTTI der sechs DL sTTIs, und Auswählen von zwei verschiedenen aufeinanderfolgenden Symbolen des zweiten Schlitzes des DL-Teilrahmens für ein fünftes DL sTTI und ein sechstes DL sTTI der sechs DL sTTIs.

3. Vorrichtung nach Anspruch 2, wobei die erste DL sTTI den Physical Downlink Control Channel, PDCCH, in einem ersten Symbol des DL-Teilrahmens oder in den ersten drei Symbolen des DL-Teilrahmens umfasst.

4. Vorrichtung nach Anspruch 1, wobei die Vielzahl von DL sTTIs sechs DL sTTIs umfasst, und wobei die Verarbeitungsschaltung konfiguriert ist zum Indizieren der sechs DL sTTIs, indem sie zwei unterschiedliche aufeinanderfolgende Symbole des ersten Schlitzes des DL-Teilrahmens für jedes eines ersten DL sTTI und eines zweiten DL sTTI der sechs DL sTTIs auswählt, Auswählen von drei letzten Symbolen eines ersten Schlitzes des DL-Teilrahmens für eine dritte DL sTTI der sechs DL sTTIs, Auswählen von zwei verschiedenen aufeinanderfolgenden Symbolen des zweiten Schlitzes des DL-Teilrahmens für eine vierte DL sTTI und eine fünfte DL sTTI der sechs DL sTTIs, und Auswählen von drei letzten Symbolen eines zweiten Schlitzes des DL-Teilrahmens für eine sechste DL sTTI der sechs DL sTTIs.

5. Vorrichtung nach Anspruch 2, wobei der erste DL sTTI PDCCH (Physical Downlink Control Channel) in den ersten zwei Symbolen des DL-Teilrahmens umfasst.

6. Vorrichtung nach Anspruch 1, wobei die Vielzahl von DL sTTIs sieben DL sTTIs umfasst und wobei die Verarbeitungsschaltung konfiguriert ist zum Indizieren der sieben DL sTTIs, indem sie zwei unterschiedliche aufeinanderfolgende Symbole des DL-Teilrahmens für jede DL sTTI der sieben DL sTTIs auswählt.

7. Vorrichtung nach Anspruch 1, wobei die Vielzahl von DL sTTIs sechs DL sTTIs umfasst, und wobei die Verarbeitungsschaltung konfiguriert ist zum Indizieren der sechs DL sTTIs, indem sie die ersten vier Symbole des DL-Teilrahmens für eine erste DL sTTI der sechs DL sTTIs auswählt und Auswählen von zwei unterschiedlichen aufeinanderfolgenden Symbolen für jede andere DL sTTI der sechs DL sTTIs.

8. Vorrichtung nach einem der Ansprüche 1 bis 7, wobei die Multi-STTI-Planungsinformationen sPDSCH für zwei oder mehr sTTIs der Vielzahl von DL sTTIs angeben.

9. Vorrichtung nach Anspruch 8, wobei die Verarbeitungsschaltung ferner konfiguriert ist zum:

Dekodieren einer zweiten DCI-Nachricht aus dem DL-Teilrahmen, wobei die zweite DCI-Nachricht zusätzliche Zeitplanungsinformationen umfasst, die mit einer Teilmenge des Zeitplanungsfensters verbunden sind; und Ersetzen eines Teils der Multi-Planungsinformationen, die mit der Teilmenge des Planungsfensters verbunden sind, durch die zusätzlichen Planungsinformationen.

**10.** Vorrichtung, die für den Einsatz in einer Basisstation, BS, konfiguriert ist, umfassend:

eine Speicherschnittstelle; und
eine Verarbeitungsschaltung, die konfiguriert ist zum:

Indizieren einer Vielzahl von Downlink, DL, verkürzten TTIs, Übertragungszeitintervallen, sTTIs eines DL-Teilrahmens zumindest teilweise auf der Grundlage von Symbollängen jedes der Vielzahl von DL sTTIs;
Codieren einer ersten Downlink Control Information, DCI, Nachricht, die mit einer ersten Benutzervorrichtung, UE, assoziiert ist, die mindestens einen von sTTI Physical Downlink Shared Channel, sPDSCH, für einen oder mehrere DL sTTIs des DL-Teilrahmens anzeigt, wobei die erste DCI-Nachricht ein Bitmap-Feld umfasst, das n Bits umfasst, wobei n gleich der Anzahl von sTTIs innerhalb des Planungsfensters ist, und wobei jedes Bit der n Bits anzeigt, ob ein assoziierter sTTI innerhalb des Planungsfensters für sPDSCH oder sPUSCH geplant ist; und
Übertragen der DCI-Nachricht an die UE;

wobei die Verarbeitungsschaltung konfiguriert ist zum Indizieren der Vielzahl von DL sTTIs, indem sie für jede DL sTTI der Mehrzahl von DL sTTIs eine Vielzahl von zugehörigen Symbolen des DL-Teilrahmens auswählt, wobei die Vielzahl von zugehörigen Symbolen für jede DL sTTI Symbole aus einem einzelnen Schlitz des DL-Teilrahmens umfasst.

**11.** Vorrichtung nach Anspruch 10, wobei die Vielzahl von DL sTTIs sechs DL sTTIs umfasst und wobei die Verarbeitungsschaltung konfiguriert ist zum Indizieren der sechs DL sTTIs, indem sie die ersten drei Symbole eines ersten Schlitzes des DL-Teilrahmens für ein erstes DL sTTI der sechs DL sTTIs auswählt, Auswählen von zwei verschiedenen aufeinanderfolgenden Symbolen des ersten Schlitzes des DL-Teilrahmens für ein zweites DL sTTI und ein drittes DL sTTI der sechs DL sTTIs, Auswählen von ersten drei Symbolen eines zweiten Schlitzes des DL-Teilrahmens für ein viertes DL sTTI der sechs DL sTTIs, und Auswählen von zwei verschiedenen aufeinanderfolgenden Symbolen des zweiten Schlitzes des DL-Teilrahmens für ein fünftes DL sTTI und ein sechstes DL sTTI der sechs DL sTTIs.

**12.** Vorrichtung nach Anspruch 11, wobei der erste DL sTTI PDCCH (Physical Downlink Control Channel) in einem ersten Symbol des DL-Teilrahmens oder in den ersten drei Symbolen des DL-Teilrahmens umfasst.

**13.** Vorrichtung nach Anspruch 10, wobei die Vielzahl von DL sTTIs sechs DL sTTIs umfasst, und wobei die Verarbeitungsschaltung konfiguriert ist zum der sechs DL sTTIs, indem sie zwei unterschiedliche aufeinanderfolgende Symbole des ersten Schlitzes des DL-Teilrahmens für jedes eines ersten DL sTTI und eines zweiten DL sTTI der sechs DL sTTIs auswählt, Auswählen von drei letzten Symbolen eines ersten Schlitzes des DL-Teilrahmens für eine dritte DL sTTI der sechs DL sTTIs, Auswählen von zwei verschiedenen aufeinanderfolgenden Symbolen des zweiten Schlitzes des DL-Teilrahmens für eine vierte DL sTTI und eine fünfte DL sTTI der sechs DL sTTIs, und Auswählen von drei letzten Symbolen eines zweiten Schlitzes des DL-Teilrahmens für eine sechste DL sTTI der sechs DL sTTIs.

**14.** Vorrichtung nach Anspruch 11, wobei der erste DL sTTI PDCCH, Physical Downlink Control Channel, in den ersten beiden Symbolen des DL-Teilrahmens umfasst.

## Revendications

**1.** Un appareil (200, 400) configuré pour être employé dans un équipement utilisateur, UE, (101, 102) comprenant :

une interface mémoire (204G, 430) ; et
une circuiterie de traitement (204A-204E, 410) configurée pour :

indexer une pluralité d'intervalles de temps de transmission, TTI, raccourcis, sTTI, de liaison descendante, DL, d'une sous-trame de DL sur la base au moins en partie de longueurs de symbole de chacun de la pluralité de sTTI de DL, et indexer la pluralité de sTTI de DL en sélectionnant, pour chaque sTTI de DL de la pluralité de sTTI de DL, une pluralité de symboles associés de la sous-trame de DL, dans lequel la pluralité de symboles associés pour chaque sTTI de DL comprend des symboles provenant d'un unique slot de la sous-trame de DL,
décoder un premier message d'information de contrôle de liaison descendante, DCI, à partir de la sous-trame de DL, dans lequel la DCI comprend un champ de bitmap comprenant n bits, dans lequel n est égal au nombre de sTTI à l'intérieur de la fenêtre de planification, et dans lequel chaque bit des n bits indique si un sTTI associé à l'intérieur de la fenêtre de planification est planifié pour un sPDSCH ou pour un sPUSCH ; et

déterminer, sur la base du premier message DCI, au moins un parmi un ou plusieurs sTTI de DL de la pluralité de sTTI de DL qui sont associés à un sPDSCH.

**2.** L'appareil selon la revendication 1, dans lequel la pluralité de sTTI de DL comprend six sTTI de DL, et dans lequel la circuiterie de traitement est configurée en outre pour indexer les six sTTI de DL en sélectionnant trois premiers symboles d'un premier slot de la sous-trame de DL pour un premier sTTI de DL des six sTTI de DL, en sélectionnant deux symboles consécutifs distincts du premier slot de la sous-trame de DL pour chacun parmi un deuxième sTTI de DL et un troisième sTTI de DL des six sTTI de DL, en sélectionnant trois premiers symboles d'un deuxième slot de la sous-trame de DL pour un quatrième sTTI de DL des six sTTI de DL, et en sélectionnant deux symboles consécutifs distincts du deuxième slot de la sous-trame de DL pour chacun parmi un cinquième sTTI de DL et un sixième sTTI de DL des six sTTI de DL.

**3.** L'appareil selon la revendication 2, dans lequel le premier sTTI de DL comprend un canal physique de contrôle de liaison descendante, PDCCH, dans un premier symbole de la sous-trame de DL ou dans trois premiers symboles de la sous-trame de DL.

**4.** L'appareil selon la revendication 1, dans lequel la pluralité de sTTI de DL comprend six sTTI de DL, et dans lequel la circuiterie de traitement est configurée pour indexer les six sTTI de DL en sélectionnant deux symboles consécutifs distincts du premier slot de la sous-trame de DL pour chacun parmi un premier sTTI de DL et un deuxième sTTI de DL des six sTTI de DL, en sélectionnant trois symboles finaux d'un premier slot de la sous-trame de DL pour un troisième sTTI de DL des six sTTI de DL, en sélectionnant deux symboles consécutifs distincts du deuxième slot de la sous-trame de DL pour chacun parmi un quatrième sTTI de DL et un cinquième sTTI de DL des six sTTI de DL, et en sélectionnant trois symboles finaux d'un deuxième slot de la sous-trame de DL pour un sixième sTTI de DL des six sTTI de DL.

**5.** L'appareil selon la revendication 2, dans lequel le premier sTTI de DL comprend un PDCCH (canal physique de contrôle de liaison descendante) dans deux premiers symboles de la sous-trame de DL.

**6.** L'appareil selon la revendication 1, dans lequel la pluralité de sTTI de DL comprend sept sTTI de DL, et dans lequel la circuiterie de traitement est configurée en outre pour indexer les sept sTTI de DL en sélectionnant deux symboles consécutifs distincts de la sous-trame de DL pour chaque sTTI de DL des sept sTTI de DL.

**7.** L'appareil selon la revendication 1, dans lequel la pluralité de sTTI de DL comprend six sTTI de DL, et dans lequel la circuiterie de traitement est configurée pour indexer les six sTTI de DL en sélectionnant quatre premiers symboles de la sous-trame de DL pour un premier sTTI de DL des six sTTI de DL, et en sélectionnant deux symboles consécutifs distincts pour chaque autre sTTI de DL des six sTTI de DL.

**8.** L'appareil selon l'une des revendications 1 à 7, dans lequel l'information de planification multi-sTTI indique un sPDSCH pour au moins deux sTTI de la pluralité de sTTI de DL.

**9.** L'appareil selon la revendication 8, dans lequel la circuiterie de traitement est configurée en outre pour :

décoder un deuxième message DCI à partir de la sous-trame de DL, dans lequel le deuxième message DCI comprend une information de planification supplémentaire associée à un sous-ensemble de la fenêtre de planification ; et
remplacer une partie de l'information de multi-planification associée au sous-ensemble de la fenêtre de planification par l'information de planification supplémentaire.

**10.** Un appareil configuré pour être employé dans une station de base, BS, comprenant :

une interface mémoire ; et
une circuiterie de traitement configurée pour :

indexer une pluralité d'intervalles de temps de transmission, TTI, raccourcis, sTTI, de liaison descendante, DL, d'une sous-trame de DL sur la base au moins en partie de longueurs de symbole de chacun de la pluralité de sTTI de DL ;

coder un premier message d'information de contrôle de liaison descendante, DCI, associé à un premier équipement utilisateur, UE, qui indique au moins un parmi un canal physique partagé de liaison descendante sTTI, sPDSCH, pour un ou plusieurs sTTI de DL de la sous-trame de DL, dans lequel le premier message DCI comprend un champ de bitmap comprenant n bits, dans lequel n est égal au nombre de sTTI à l'intérieur de la fenêtre de planification, et dans lequel chaque bit des n bits indique si un sTTI associé à l'intérieur de la fenêtre de planification est planifié pour un sPDSCH ou pour un sPUSCH ;

dans lequel la circuiterie de traitement est configurée pour indexer la pluralité de sTTI de DL en sélectionnant, pour chaque sTTI de DL de la pluralité de sTTI de DL, une pluralité de symboles associés de la sous-trame de DL, dans lequel la pluralité de symboles associés pour chaque sTTI de DL comprend des symboles provenant d'un unique slot de la sous-trame de DL.

11. L'appareil selon la revendication 10, dans lequel la pluralité de sTTI de DL comprend six sTTI de DL, et dans lequel la circuiterie de traitement est configurée pour indexer les six sTTI de DL en sélectionnant trois premiers symboles d'un premier slot de la sous-trame de DL pour un premier sTTI de DL des six sTTI de DL, en sélectionnant deux symboles consécutifs distincts du premier slot de la sous-trame de DL pour chacun parmi un deuxième sTTI de DL et un troisième sTTI de DL des six sTTI de DL, en sélectionnant trois premiers symboles d'un deuxième slot de la sous-trame de DL pour un quatrième sTTI de DL des six sTTI de DL, et en sélectionnant deux symboles consécutifs distincts du deuxième slot de la sous-trame de DL pour chacun parmi un cinquième sTTI de DL et un sixième sTTI de DL des six sTTI de DL.

12. L'appareil selon la revendication 11, dans lequel le premier sTTI de DL comprend un PDCCH (canal physique de contrôle de liaison descendante) dans un premier symbole de la sous-trame de DL ou dans trois premiers symboles de la sous-trame de DL.

13. L'appareil selon la revendication 10, dans lequel la pluralité de sTTI de DL comprend six sTTI de DL, et dans lequel la circuiterie de traitement est configurée pour indexer les six sTTI de DL en sélectionnant deux symboles consécutifs distincts du premier slot de la sous-trame de DL pour chacun parmi un premier sTTI de DL et un deuxième sTTI de DL des six sTTI de DL, en sélectionnant trois symboles finaux d'un premier slot de la sous-trame de DL pour un troisième sTTI de DL des six sTTI de DL, en sélectionnant deux symboles consécutifs distincts du deuxième slot de la sous-trame de DL pour chacun parmi un quatrième sTTI de DL et un cinquième sTTI de DL des six sTTI de DL, et en sélectionnant trois symboles finaux d'un deuxième slot de la sous-trame de DL pour un sixième sTTI de DL des six sTTI de DL.

14. L'appareil selon la revendication 11, dans lequel le premier sTTI de DL comprend un PDCCH, canal physique de contrôle de liaison descendante, dans deux premiers symboles de la sous-trame de DL.

**FIG. 1**

EP 3 491 768 B1

DEVICE 200

**FIG. 2**

FIG. 3

FIG. 4

400

To antenna(s)

420 — TRANSCEIVER CIRCUITRY

410 — PROCESSOR(S)

430 — MEMORY

FIG. 5

FIG. 6

710

**4os UL sTTI**

| 0 | 1 | 2 | 3 | 4 | 5 | 6 | 7 | 8 | 9 | 10 | 11 | 12 | 13 | Option 1 |
|---|---|---|---|---|---|---|---|---|---|----|----|----|----|----------|
|   | R |   |   | R |   |   |   | R |   |    | R  |    |    | — UL DMRS |

| sTTI | 0 (N-sTTI) | 1 (E-sTTI) | 2 (N-sTTI) | 3 (E-sTTI) | SRS |
|------|------------|------------|------------|------------|-----|

720

**4os UL sTTI**

| 0 | 1 | 2 | 3 | 4 | 5 | 6 | 7 | 8 | 9 | 10 | 11 | 12 | 13 | Option 2 |
|---|---|---|---|---|---|---|---|---|---|----|----|----|----|----------|
|   | R |   |   | R |   |   |   | R |   |    | R  |    |    | — UL DMRS |

| sTTI | 0 (E-sTTI) | 1 (N-sTTI) | 2 (E-sTTI) | 3 (N-sTTI) | SRS |
|------|------------|------------|------------|------------|-----|

**FIG. 7**

EP 3 491 768 B1

Paired consecutive subframes for
HARQ feedback and UL sTTI
scheduling
800

Time
domain

Frequency domain

1 subframe

840     850     860     870

DL

1 DL sTTI
810

DL sTTI without UL grant

DL sTTI with UL grant

UL sTTI

·········▶    DL HARQ timing

- - - -▶    UL scheduling timing

UL

880     885     890     895

1 subframe

1 UL sTTI
830

FIG. 8

EP 3 491 768 B1

FIG. 9

1000

1010 — INDEX DL sTTIs OF DL SUBFRAME

1020 — RECEIVE DCI MESSAGE(S) VIA DL SUBFRAME

1030 — DETERMINE sPDSCH SCHEDULED FOR DL sTTIs AND/OR sPUSCH SCHEDULED FOR UL sTTIs BASED ON DCI MESSAGE(s)

**FIG. 10**

1100

INDEX DL sTTIs OF A DL SUBFRAME AND UL sTTIs OF AN ASSOCIATED UL SUBFRAME

1110

TRANSMIT DCI MESSAGE(S) INDICATING sPDSCH FOR DL sTTI(s) AND/OR sPUSCH FOR UL sTTI(s)

1120

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 62366862

**Non-patent literature cited in the description**

• **LG ELECTRONICS.** Discussions on DCI and sPD-CCH for latency reduction. *3GPP Draft; R1-164542,* vol. RAN WG1

• **ERICSSON.** On the Operation with different TTI lengths. *3GPP DRAFT; R1-165299*
• **ERICSSON.** Physical design aspects of sPDSCH. *3GPP DRAFT; R1-165295*